# EUROPEAN PATENT SPECIFICATION

(11) **EP 4 421 350 B1**
(45) Date of publication and mention of the grant of the patent: **28.10.2026**
(21) Application number: 22885137.4
(22) Date of filing: 17.06.2022
(51) Int. Cl.: F16H 49/00

(54) **HARMONIC GEAR DEVICE, MANUFACTURING METHOD FOR HARMONIC GEAR DEVICE, ROBOT JOINT DEVICE, GEAR COMPONENT FOR ROBOT**
HARMONISCHE GETRIEBEVORRICHTUNG, HERSTELLUNGSVERFAHREN FÜR HARMONISCHE GETRIEBEVORRICHTUNG, ROBOTERGELENKVORRICHTUNG, GETRIEBEKOMPONENTE FÜR ROBOTER
DISPOSITIF D'ENGRENAGE HARMONIQUE, PROCÉDÉ DE FABRICATION POUR DISPOSITIF D'ENGRENAGE HARMONIQUE, DISPOSITIF D'ARTICULATION DE ROBOT, COMPOSANT D'ENGRENAGE POUR ROBOT

(30) Priority: 25.10.2021 JP 2021174097
(43) Date of publication of application: 28.08.2024
(73) Proprietor: Midea Group Co., Ltd., Foshan, Guangdong 528311 (CN); Guangdong Jiya Precision Machinery Technology Co., Ltd, Foshan, Guangdong 528315 (CN); GD Midea Air-Conditioning Equipment Co., Ltd., Foshan, Guangdong 528311 (CN)
(72) Inventor: WANG, Gang, Osaka 532-0003 (JP); LIN, Wenjie, Osaka 532-0003 (JP); MINEGISHI, Kiyoji, Osaka 532-0003 (JP); ISAJI, Tsuyoshi, Osaka 532-0003 (JP); GUO, Ziming, Osaka 532-0003 (JP)
(74) Representative: RGTH
(86) International application number: PCT/CN2022/099475
(87) International publication number: WO 2023/071231

(56) References cited:
- CN-A- 107 210 686
- CN-A- 108 472 775
- CN-A- 108 472 775
- CN-A- 108 884 923
- CN-A- 112 756 707
- FR-A5- 2 045 185
- JP-A- 2000 179 631
- JP-A- 2009 156 461
- JP-A- 2010 127 452
- JP-A- 2015 209 931
- JP-A- 2019 143 745
- TW-A- 201 535 955
- TW-A- 201 535 955

## Description

### TECHNICAL FIELD

The application generally relates to a harmonic gear device, a method for manufacturing a harmonic gear device, and a joint device for a robot, and more particularly, to a harmonic gear device comprising a rigid internal gear, a flexible external gear and a wave generator, a method for manufacturing a harmonic gear device, and a joint device for a robot.

### BACKGROUND

Patent Document 1 discloses that surface treatment of a flexible external gear in a harmonic gear device (a flexural-meshing type gear device) is carried out by nitridation treatment.

The harmonic gear device is provided with an annular rigid internal gear, a cup-shaped flexible external gear arranged at an inner side of the rigid internal gear, and an elliptical wave generator embedded in an inner side of the flexible external gear. The flexible external gear comprises a cylindrical trunk part and external teeth formed on an outer peripheral surface of the trunk part. The flexible external gear is flexed into an ellipse by the wave generator, and a part of external teeth located at two ends in a major axis direction of the ellipse are meshed with internal teeth formed on an inner peripheral surface of the rigid internal gear.

When the wave generator is rotated by a motor or the like, a meshing position of two gears moves in a circumferential direction, and relative rotation corresponding to a difference between tooth numbers of internal teeth and external teeth (2N (N is a positive integer)) is generated between the two gears. Here, when the rigid internal gear side is fixed, it is possible to obtain, from the flexible external gear side, a rotational output greatly decelerated corresponding to the difference between tooth numbers of the two gears. Further, CN 108 872 775 A discloses a method for manufacturing a gear and TW 2015 359 55 A regards a pulsating gear device.

### Related art document

### Patent document

Patent Document 1: Japanese publication No. 2001-59153

### SUMMARY

### Technical problem to be solved by the application

However, in the above harmonic gear device, the external teeth located at two ends in a major axis direction of the flexible external gear flexed into an ellipse press the internal teeth of the rigid internal gear like wedges, so that the external teeth are meshed with the internal teeth to obtain the rotational output. Therefore, the external teeth and the internal teeth rub against each other especially at contact portions of the external teeth and the internal teeth, in a state where the external teeth are pressed against the internal teeth. Therefore, at the contact portions of the external teeth and the internal teeth, loss due to wear may occur, which results in surface roughness, occurrence of rust due to wear powder, and damage of (bearing of) the wave generator due to the wear powder entering an inner side of the wave generator, or the like, so that power transmission efficiency of the harmonic gear device may reduce.

The application is made in view of the above facts, and an object of the application is to provide a harmonic gear device, a method for manufacturing a harmonic gear device, and a joint device for a robot, which are difficult to reduce power transmission efficiency.

### Solutions for solving the technical problem

A harmonic gear device according to the present invention is defined in claim 1. Preferred embodiments of the invention are defined in the appended dependent claims.

A method for manufacturing a harmonic gear device according to an aspect of the present invention is defined in claim 6.

A joint device for a robot according to an aspect of the application comprises the harmonic gear device; a first member fixed to the rigid internal gear; and a second member fixed to the flexible external gear.

### Effects of the application

According to the application, there are advantages as follows: it is possible to provide a harmonic gear device, a method for manufacturing a harmonic gear device, and a joint device for a robot, which are difficult to reduce power transmission efficiency.

### BRIEF DESCRIPTION OF THE DRAWINGS

FIG. 1A is a cross-sectional view showing a diagrammatic structure of a harmonic gear device according to the invention.
FIG. 1B is an enlarged view of a region Z1 of FIG. 1A.
FIG. 2A is a diagrammatic diagram of the above harmonic gear device as observed from an input side of a rotation axis.
FIG. 2B is an enlarged view of a region Z1 of FIG. 2A.
FIG. 3A is a diagrammatic exploded perspective view of the above harmonic gear device as observed from an output side of a rotation axis.
FIG. 3B is a diagrammatic exploded perspective view of the above harmonic gear device as observed from an input side of a rotation axis.
FIG. 4 is a cross-sectional view showing a diagrammatic structure of an actuator comprising the above harmonic gear device.
FIG. 5 is a diagrammatic cross-sectional view obtained by enlarging main parts in a range corresponding to FIG. 1B.
FIG. 6A is a diagrammatic view showing a surface state of an inner peripheral surface of a flexible external gear in a region Z1 of FIG. 5.
FIG. 6B is a diagrammatic view showing a surface state of an inner peripheral surface of a flexible external gear in a region Z2 of FIG. 5.
FIG. 7 is a diagrammatic enlarged view of a region Z1 of FIG. 2B.
FIG. 8A is a diagrammatic diagram showing a surface state of external teeth in a region Z1 of FIG. 7.
FIG. 8B is a diagrammatic diagram showing a surface state of external teeth in a region Z2 of FIG. 7.
FIG. 9 is a conceptual explanatory diagram showing operations of a long-axis side and a short-axis side of a tapering surface of the above harmonic gear device.
FIG. 10 is a cross-sectional view showing an example of a robot using the above harmonic gear device.
FIG. 11 is a diagrammatic explanatory view showing processes of processing an inner peripheral surface of a flexible external gear of the above harmonic gear device.
FIG. 12A is a diagrammatic cross-sectional view showing a rolling roller and a chuck member used for processing an inner peripheral surface of a flexible external gear of the above harmonic gear device.
FIG. 12B is a diagrammatic side view showing a rolling roller and a chuck member used for processing an inner peripheral surface of a flexible external gear of the above harmonic gear device.
FIG. 13A is a diagrammatic cross-sectional view showing a chuck member.
FIG. 13B is a diagrammatic enlarged view of a region Z1 of FIG. 13A.
FIG. 14 is a diagrammatic explanatory view showing processes of processing external teeth of a flexible external gear of the above harmonic gear device.
FIG. 15A is a diagrammatic cross-sectional view showing a hob used for processing external teeth of a flexible external gear of the above harmonic gear device.
FIG. 15B is a diagrammatic side view showing a hob used for processing external teeth of a flexible external gear of the above harmonic gear device.
FIG. 16A is a diagrammatic cross-sectional view showing a tool used for processing external teeth of a flexible external gear of the above harmonic gear device.
FIG. 16B is a diagrammatic side view showing a tool used for processing external teeth of a flexible external gear of the above harmonic gear device.
FIG. 17A is a cross-sectional view showing a diagrammatic structure of a harmonic gear device.
FIG. 17B is an enlarged view of a region Z1 of FIG. 17A.
FIG. 18A is a diagrammatic diagram showing a main part of a harmonic gear device.
FIG. 18B is a diagrammatic diagram showing a surface state of internal teeth in a region Z1 of FIG. 18A.
FIG. 18C is a diagrammatic diagram showing a surface state of internal teeth in a region Z2 of FIG. 18B.

### DETAILED DESCRIPTION

### (1) Summary

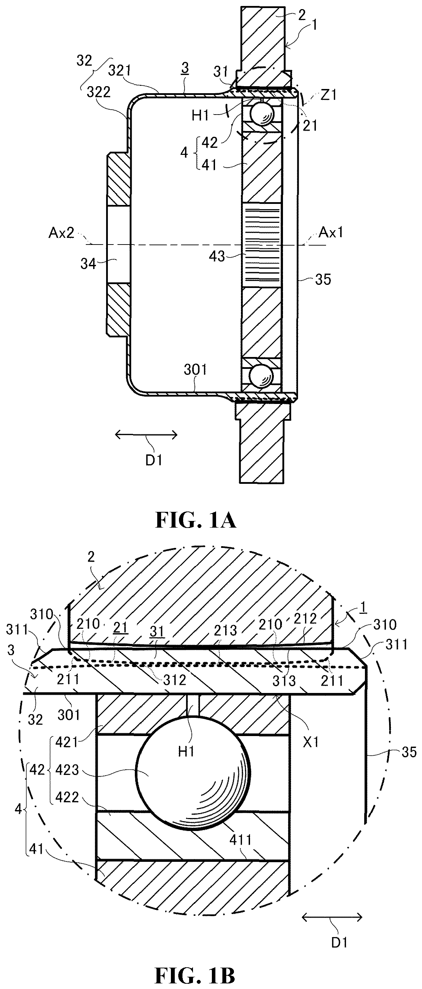

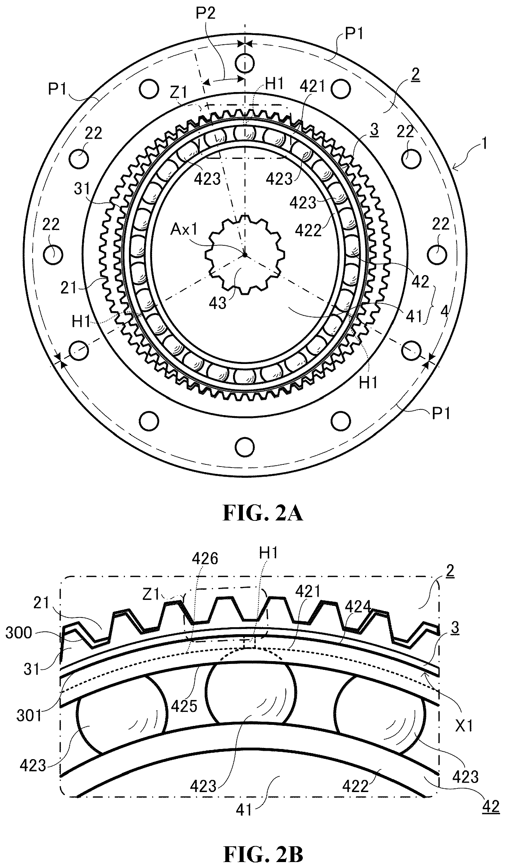

Hereinafter, summary of a harmonic gear device 1 is explained with reference to FIG. 1A to FIG. 5. Drawings referred by the application are schematic views, and respective ratios of sizes and thicknesses of structural elements in the drawings are not necessarily limited to reflect actual size ratios. For example, tooth shapes, sizes, tooth numbers, or the like of internal teeth 21 and external teeth 31 in FIG. 2A to FIG. 3B are merely shown schematically for illustration, and do not mean that they are limited to the shapes as shown.

The harmonic gear device 1 related to the invention is a gear device comprising a rigid internal gear 2, a flexible external gear 3, and a wave generator 4. In the harmonic gear device 1, an annular flexible external gear 3 is arranged at an inner side of an annular rigid internal gear 2, and a wave generator 4 is further arranged at an inner side of the flexible external gear 3. The wave generator 4 flexes the flexible external gear 3 into a non-circular shape, to enable external teeth 31 of the flexible external gear 3 to be locally meshed with internal teeth 21 of the rigid internal gear 2. When the wave generator 4 rotates, meshing positions of the internal teeth 21 and the external teeth 31 move in a circumferential direction of the rigid internal gear 2, and relative rotation performed by the flexible external gear 3 according to a difference between tooth numbers of the flexible external gear 3 and the rigid internal gear 2 is generated between two gears (the rigid internal gear 2 and the flexible external gear 3). Here, if the rigid internal gear 2 is fixed, the flexible external gear 3 rotates with relative rotation of the two gears. As a result, a rotational output which is decelerated at a relatively high reduction ratio corresponding to the difference between tooth numbers of the two gears, may be obtained from the flexible external gear 3.

Furthermore, the wave generator 4 enabling the flexible external gear 3 to generate flexure is provided with a non-circular cam 41 rotatably driven with a rotation axis Ax1 (referring to FIG. 1A) at an input side as a center, and a bearing 42. The bearing 42 is arranged between an outer peripheral surface 411 of the cam 41 and an inner peripheral surface 301 of the flexible external gear 3. An inner ring 422 of the bearing 42 is fixed on the outer peripheral surface 411 of the cam 41, and an outer ring 421 of the bearing 42 is pressed by the cam 41 through ball-shaped rolling bodies 423, to generate elastic deformation. Here, the outer ring 421 may relatively rotate relative to the inner ring 422 due to rolling by the rolling bodies 423, therefore when the non-circular cam 41 rotates, rotation of the inner ring 422 is not transmitted to the outer ring 421, instead, generates harmonic motion on the external teeth 31 of the flexible external gear 3 pressed by the cam 41. Due to harmonic motion of the external teeth 31, the above meshing positions of the internal teeth 21 and the external teeth 31 move in the circumferential direction of the rigid internal gear 2, so that the flexible external gear 3 generates relative rotation between it and the rigid internal gear 2.

In summary, in such harmonic gear device 1, the wave generator 4 provided with the bearing 42 achieves power transmission performed through meshing of the internal teeth 21 and the external teeth 31, while flexes the flexible external gear 3.

In such harmonic gear device 1, especially if it is used for a long period of time, fretting wear may occur to a contact portion of the flexible external gear 3 and the wave generator 4, along with rotation of the wave generator 4 embedded in an inner side of the flexible external gear 3. If fretting wear occurs, it may result in surface roughness, occurrence of rust due to wear powder, and damage of (bearing 42 of) the wave generator 4 due to the wear powder entering an inner side of the wave generator 4, or the like, which may affect reliability of the harmonic gear device 1.

As an example, if deformation followability of the flexible external gear 3 is prevented due to surface roughness or rust, rotation of the wave generator 4 requires additional energy, resulting in reduction of power transmission efficiency, or shortened lifespan due to increased load applied to the bearing 42, etc. Furthermore, when the wear powder enters the bearing 42, indentation generated by the wear powder biting between the outer ring 421 or the inner ring 422 of the bearing 42 and the rolling body 423 is taken as an origin, and surface of any one of the outer ring 421, the inner ring 422 and the rolling body 423 may be damaged. Such damage (a surface origin type of exfoliation) results in deterioration of quality, characteristics, or the like of the harmonic gear device 1, and consequently results in reduction of the reliability of the harmonic gear device 1. Therefore, the harmonic gear device 1 suppresses occurrence of fretting wear by the following structures, and is difficult to result in reduction of the reliability.

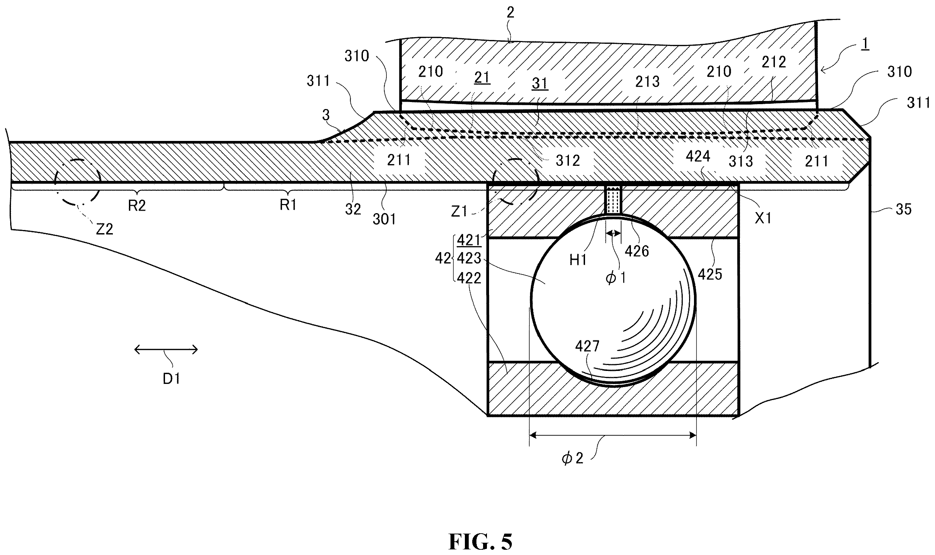

That is, as shown in FIG. 1A to FIG. 3B, the harmonic gear device 1 comprises an annular rigid internal gear 2 provided with internal teeth 21, an annular flexible external gear 3 provided with external teeth 31, and a wave generator 4. The flexible external gear 3 is arranged at an inner side of the rigid internal gear 2. The wave generator 4 is arranged at an inner side of the flexible external gear 3, and enables the flexible external gear 3 to generate flexure. The wave generator 4 is provided with a non-circular cam 41 rotatably driven with a rotation axis Ax1 as a center, and a bearing 42 mounted at an outer side of the cam 41. The harmonic gear device 1 makes the flexible external gear 3 deformed with rotation of the cam 41, so that a part of the external teeth 31 are meshed with a part of the internal teeth 21, to enable the flexible external gear 3 to relatively rotate relative to the rigid internal gear 2 according to a difference between tooth numbers of the flexible external gear 3 and the rigid internal gear 2. Here, as shown in FIG. 5, a first region R1 located at a back side of the external teeth 31, in the inner peripheral surface 301 of the flexible external gear 3 has a smaller surface roughness than a second region R2 except the first region R1.

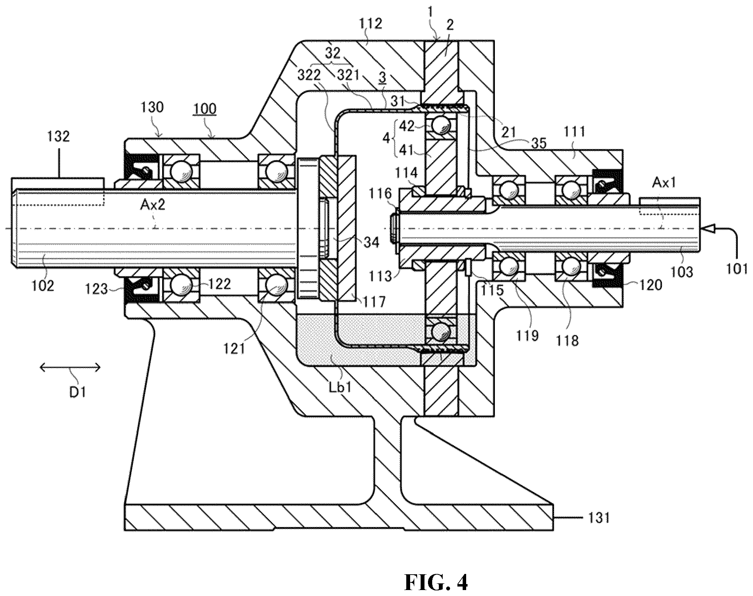

According to this aspect, a contact portion of the flexible external gear 3 and the bearing 42 is formed in a surface state where it is easy to maintain a state covered with a lubricant Lb1 (referring to FIG. 4). In summary, a portion at the back side of the external teeth 31 pressed by the bearing 42, in the inner peripheral surface 301 of the flexible external gear 3, is provided with the first region R1 of which surface roughness is smaller than other surface roughness. Therefore, it is easy for the portion to maintain the state covered with the lubricant Lb1.

That is, the harmonic gear device 1 suppresses occurrence of fretting wear by preventing "lubricant depletion" in which the lubricant Lb1 is insufficient or exhausted at the contact portion of the outer ring 421 and the flexible external gear 3. Further, the first region R1 having a surface roughness smaller than that of the second region R2 is arranged at the back side of the external teeth 31 in the inner peripheral surface 301 of the flexible external gear 3, so that sufficient lubricant Lb1 is maintained at the contact portion of the flexible external gear 3 and the wave generator 4. As a result, a surface of the contact portion of the flexible external gear 3 and (the outer ring 421 of) the bearing 42 is formed in a surface state where it is covered with the lubricant Lb1, and occurrence of fretting wear is suppressed. Therefore, in the harmonic gear device 1, it is difficult to generate bad conditions caused by fretting wear between (the outer ring 421 of) the bearing 42 and the flexible external gear 3, and it is possible to provide the harmonic gear device 1 of which reliability is difficult to reduce. Furthermore, the harmonic gear device 1 is difficult to reduce reliability even when it is used for a long period of time, therefore transmission efficiency of the harmonic gear device 1 is improved, lifespan of the harmonic gear device 1 is extended, and performance of the harmonic gear device 1 is improved.

Furthermore, in such harmonic gear device 1, the external teeth 31 located at two ends in a major axis direction of the flexible external gear 3 flexed into an ellipse (non-circular shape) press the internal teeth 21 of the rigid internal gear 2 like wedges, so that the external teeth 31 are meshed with the internal teeth 21 to obtain a rotational output. Therefore, the external teeth 31 and the internal teeth 21 rub against each other especially at contact portions of the external teeth 31 and the internal teeth 21, in a state where the external teeth 31 are pressed against the internal teeth 21. Therefore, at the contact portions of the external teeth 31 and the internal teeth 21, loss due to wear may occur, which results in surface roughness, occurrence of rust due to wear powder, and damage of the wave generator 4 due to the wear powder entering an inner side of the wave generator 4, or the like, and may affect reliability of the harmonic gear device 1.

That is, if deformation followability of the flexible external gear 3 is prevented due to loss caused by friction of the external teeth 31 and the internal teeth 21, or surface roughness or occurrence of rust, rotation of the wave generator 4 requires additional energy, resulting in reduction of power transmission efficiency. Therefore, the harmonic gear device 1 reduces friction of the external teeth 31 and the internal teeth 21 by the following structures, so that it is difficult to reduce power transmission efficiency.

As shown in FIG. 2B, in the harmonic gear device 1, at least one of the external teeth 31 comprises a rolling surface 300. The rolling surface 300 is not formed by shearing metal crystalline grains like cutting processing, instead, formed by not shearing metal crystalline grains (by rolling processing). Therefore, the rolling surface 300 comprised in at least one of the external teeth 31 is formed in a smooth surface state where metal crystalline grains are not sheared.

According to this state, since friction of the external teeth 31 and the internal teeth 21 is reduced, the loss caused by friction of the external teeth 31 and the internal teeth 21 is reduced, so that it is difficult to reduce power transmission efficiency of the harmonic gear device 1. Furthermore, since surface roughness or rust caused by friction is suppressed, it is also difficult to prevent deformation followability of the flexible external gear 3, and it is not easy for rotation of the wave generator 4 to require additional energy, thereby suppressing reduction of power transmission efficiency. As a result, it is possible to provide the harmonic gear device 1 for which it is difficult to reduce power transmission efficiency.

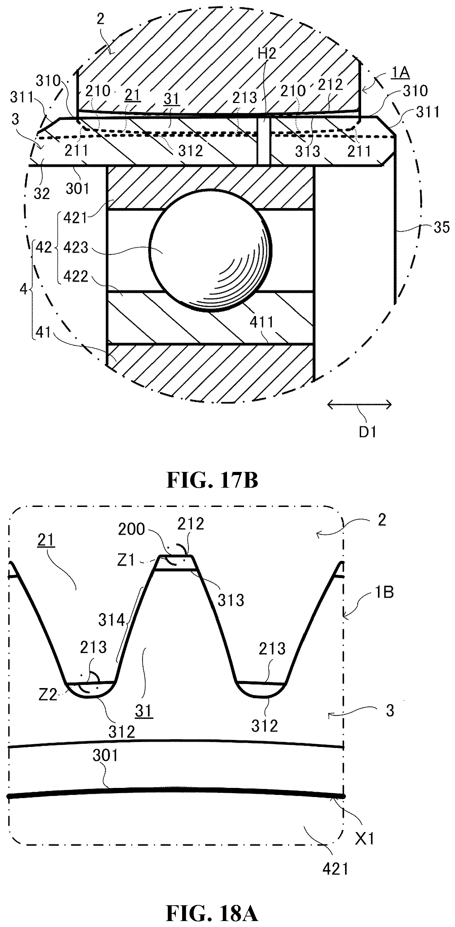

It is enough for the rolling surface 300 to be arranged on at least one of the external teeth 31. In the application, when rolling surfaces arranged on the external teeth 31 and the internal teeth 21 respectively are distinguished, the rolling surface 300 arranged on the external teeth 31 is referred to as a "first rolling surface", and a rolling surface 200 (referring to FIG. 18A) arranged on the internal teeth 21 is referred to as a "second rolling surface". As an example, the rolling surface 300 is arranged only on the external teeth 31 from the external teeth 31 and the internal teeth 21. In other words, the rolling surface 300 comprises the "first rolling surface" arranged on the external teeth 31. On the other hand, the rolling surface (the second rolling surface) on the internal teeth 21 side will be described in other implementations.

Furthermore, as shown in FIG. 4, the harmonic gear device 1 constitutes an actuator 100 together with a driving source 101 and an output part 102. In other words, the actuator 100 comprises the harmonic gear device 1, the driving source 101 and the output part 102. The driving source 101 rotates the wave generator 4. The output part 102 takes rotation force of either the rigid internal gear 2 or the flexible external gear 3 out, as an output.

Furthermore, as shown in FIG. 4, the harmonic gear device 1 together with a first member 131 and a second member 132 constitute a joint device for a robot 130. In other words, the joint device for a robot 130 comprises the harmonic gear device 1, the first member 131 and the second member 132. The first member 131 is fixed to the rigid internal gear 2. The second member 132 is fixed to the flexible external gear 3. As a result, in the harmonic gear device 1, the flexible external gear 3 generates relative rotation between it and the rigid internal gear 2, so that the first member 131 and the second member 132 in the joint device for a robot 130 rotate relatively.

According to the joint device for a robot 130, there is an advantage that it is difficult to reduce reliability of the harmonic gear device 1. Furthermore, according to the joint device for a robot 130, there is an advantage that it is difficult to reduce power transmission efficiency.

### (2) Definition

"annular shape" stated in the application refers to a shape such as a ring (circle) which forms an enclosed space (area) on an inner side when it is observed at least in a top view, and is not limited to a circular shape (circular ring shape) which is a perfect circle when it is observed in a top view, for example, may also be an elliptical shape, a polygonal shape, etc. Furthermore, for example, it may also be a shape with a bottom part 322 like a cup-shaped flexible external gear 3, and if a trunk part 321 is annular, it may be referred to as a "annular" flexible external gear 3.

"rigid" mentioned in the application refers to a property of an object resisting deformation when an external force is applied to the object and the object is about to deform. In other words, a rigid object is difficult to deform even when an external force is applied thereto. Furthermore, "flexible" mentioned in the application refers to a property of an object deforming elastically (flexing) when an external force is applied to the object. In other words, a flexible object is easy to deform elastically when an external force is applied thereto. Therefore, "rigid" and "flexible" have opposite meanings.

In particular, in the application, "rigid" of the rigid internal gear 2 and "flexible" of the flexible external gear 3 are used in opposite meanings. That is, "rigid" of the rigid internal gear 2 means that the rigid internal gear 2 has relatively high rigidity compared at least with the flexible external gear 3, that is, the rigid internal gear 2 is difficult to deform even through an external force is applied to the rigid internal gear 2. Similarly, "flexible" of the flexible external gear 3 means that the flexible external gear 3 has relatively high flexibility compared at least with the rigid internal gear 2, that is, the flexible external gear 3 is easy to deform elastically when an external force is applied to thereto.

Furthermore, in the application, sometimes one side (right side of FIG. 1A) of the rotation axis Ax1 is referred to as an "input side", and the other side (left side of FIG. 1A) of the rotation axis Ax1 is referred to as an "output side". That is, in the example of FIG. 1A, the flexible external gear 3 is provided with an opened surface 35 at the "input side" of the rotation axis Ax1. However, "input side" and "output side" are merely labels assigned for the purpose of illustration, and do not have a meaning of limiting a positional relationship between input and output as observed from the harmonic gear device 1.

"non-circular shape" mentioned in the application refers to a shape which is not a perfect circle, and for example, comprises an elliptical shape, an oblong shape, etc. As an example, the non-circular cam 41 of the wave generator 4 has an elliptical shape. That is, the wave generator 4 flexes the flexible external gear 3 into an elliptical shape.

"elliptical shape" stated in the application refers to all shapes where a perfect circle is flattened so that an intersection point of a major axis and a minor axis orthogonal to each other is located at the center, and is not limited to a curve formed by a set of points whose sum of distances with two fixed points on a plane is constant, i.e., "ellipse" in mathematics. That is, the cam 41 may be a curved shape formed by a set of points whose sum of distances with two fixed points on a plane is constant, like "ellipse" in mathematics; or may be an elliptical shape like an oblong, rather than "ellipse" in mathematics. As described above, drawings referred by the application are schematic views, and respective ratios of sizes and thicknesses of structural elements in the drawings are not necessarily limited to reflect actual size ratios. Therefore, for example, in FIG. 2A, the shape of the cam 41 of the wave generator 4 is set to be a slightly large elliptical shape, however, it does not have a meaning of limiting the actual shape of the cam 41.

"rotation axis" stated in the application refers to a a virtual axis (straight line) which is center of a rotational motion of a rotation body. That is, the rotation axis Ax1 is a virtual axis without an entity. The wave generator 4 rotates with the rotation axis Ax1 as a center.

Each of "internal teeth" and "external teeth" stated in the application refers to a set (group) of multiple "teeth" rather than a "tooth" as a single body. That is, the internal teeth 21 of the rigid internal gear 2 are composed of a set of multiple teeth formed on the inner peripheral surface of the rigid internal gear 2. Similarly, the external teeth 31 of the flexible external gear 3 are composed of a set of multiple teeth formed on an outer peripheral surface of the flexible external gear 3.

"parallel" stated in the application refers to a situation where two straight lines on a plane do not intersect as long as the two straight lines extend to any position, that is, except a situation where an angle between the two straight lines is strictly 0 degree (or 180 degrees), the angle between the two straight lines is in a relationship of an error range converging to a few degrees (for example, less than 10 degrees) relative to 0 degree. Similarly, "orthogonal" stated in the application refers to except a situation where an angle between two straight lines strictly intersects at 90 degrees, the angle between the two straight lines is in a relationship of an error range converging to a few degrees (for example, less than 10 degrees) relative to 90 degrees.

### (3) Constitution

Hereinafter, detailed structures of the harmonic gear device 1, the actuator 100, and the joint device for a robot 130 will be described with reference to FIG. 1A to FIG. 4.

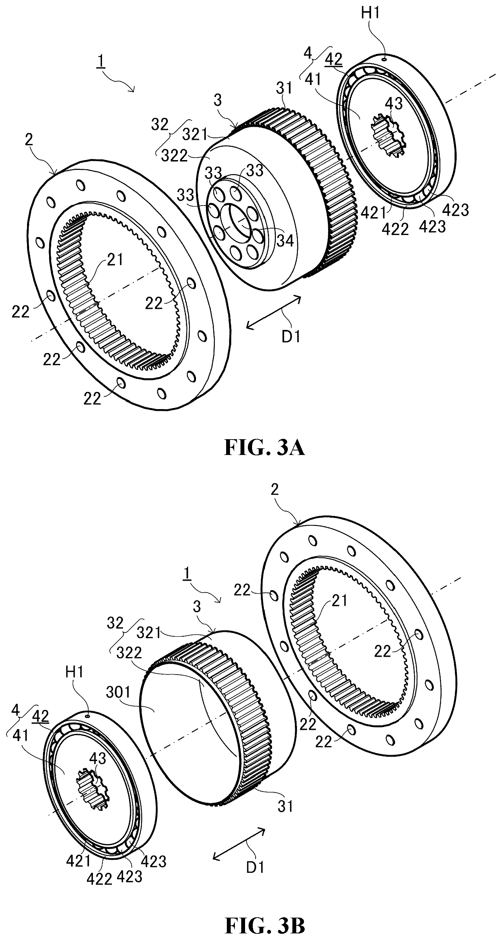

FIG. 1A is a cross-sectional view showing a diagrammatic structure of the harmonic gear device 1, FIG. 1B is an enlarged view of a region Z1 of FIG. 1A. FIG. 2A is a diagrammatic diagram of the harmonic gear device 1 as observed from an input side of a rotation axis Ax1 (right side of FIG. 1A), FIG. 2B is an enlarged view of a region Z1 of FIG. 2A. FIG. 3A is a diagrammatic exploded perspective view of the harmonic gear device 1 as observed from an output side of the rotation axis Ax1 (left side of FIG. 1A). FIG. 3B is a diagrammatic exploded perspective view of the harmonic gear device 1 as observed from an input side of the rotation axis Ax1. FIG. 4 is a cross-sectional view showing diagrammatic structures of the actuator 100 comprising the harmonic gear device 1 and the joint device for a robot 130.

### (3.1) Harmonic gear device

As described above, the harmonic gear device comprises the rigid internal gear 2, the flexible external gear 3, and the wave generator 4. Materials of the rigid internal gear 2, the flexible external gear 3, and the wave generator 4 which are used as structural elements of the harmonic gear device 1, are stainless steel, cast iron, carbon steel for mechanical structure, chrome molybdenum steel, phosphor bronze, aluminum bronze, or other metals. Metal as stated here comprises a metal which is subjected to surface treatments such as nitridation treatment, etc.

Furthermore, a cup-shaped fluctuation deceleration device is illustrated as an example of the harmonic gear device 1. That is, the flexible external gear 3 formed as a cup shape is used in the harmonic gear device 1. The wave generator 4 is combined with the flexible external gear 3 to be accommodated in the cup-shaped flexible external gear 3.

Furthermore, as an example, the harmonic gear device 1 is used in a state where the rigid internal gear 2 is fixed to an input side housing 111 (referring to FIG. 4) and an output side housing 112 (referring to FIG. 4), etc. Therefore, the flexible external gear 3 relatively rotates relative to fixing members (the input side housing 111, etc.) with relative rotation of the rigid internal gear 2 and the flexible external gear 3.

Further, in case that the harmonic gear device 1 is used for the actuator 100, a rotation force used as an input is applied to the wave generator 4, so that a rotation force used as an output may be extracted from the flexible external gear 3. That is, the harmonic gear device 1 operates by using rotation of the wave generator 4 as an input rotation and using rotation of the flexible external gear 3 as an output rotation. Therefore, in the harmonic gear device 1, an output rotation decelerated at a relatively high reduction ratio relative to the input rotation may be obtained.

Further, in the harmonic gear device 1, the rotation axis Ax1 at the input side and a rotation axis Ax2 at the output side are located on the same straight line. In other words, the rotation axis Ax1 at the input side is coaxial with the rotation axis Ax2 at the output side. Here, the rotation axis Ax1 at the input side is a rotation center of the wave generator 4 to which the input rotation is applied, and the rotation axis Ax1 at the output side is a rotation center of the flexible external gear 3 which generates the output rotation. That is, in the harmonic gear device 1, an output rotation decelerated at a relatively high reduction ratio relative to the input rotation may be obtained on the same axis.

The rigid internal gear 2 is also referred to as a circular spline, and is an annular component provided with internal teeth 21.The rigid internal gear 2 has a circular ring shape of which at least an inner peripheral surface is a perfect circle when it is observed in a top view. In the inner peripheral surface of the rigid internal gear 2 with the circular ring shape, the internal teeth 21 are formed in the circumferential direction of the rigid internal gear 2. Multiple teeth constituting the internal teeth 21 are all in the same shape, and are arranged at equal intervals in the whole area along a circumferential direction of the inner peripheral surface of the rigid internal gear 2. That is, a pitch circle of the internal tooth 21 is a perfect circle when it is observed in a top view. Furthermore, the rigid internal gear 2 has a specified thickness in a direction of the rotation axis Ax1. The internal teeth 21 are formed on the whole length of the rigid internal gear 2 in a thickness direction. Tooth directions of the internal teeth 21 are all parallel to the rotation axis Ax1.

As described above, the rigid internal gear 2 is fixed to the input side housing 111 (referring to FIG. 4), the output side housing 112 (referring to FIG. 4), etc. Therefore, multiple fixing holes 22 for fixing are formed in the rigid internal gear 2 (referring to FIG. 3A and FIG. 3B).

The flexible external gear 3 is also referred to as a flex spline, and is an annular component provided with external teeth 31. The flexible external gear 3 is a component formed into a cup shape using a metal elastic body (metal plate) with a relatively thin wall. That is, the flexible external gear 3 has flexibility due to its relatively small (thin) thickness. The flexible external gear 3 is provided with a cup-shaped body part 32. The body part 32 is provided with a trunk part 321 and a bottom part 322. In a state where the flexible external gear 3 does not generate elastic deformation, at least the inner peripheral surface 301 of the trunk part 321 has a cylindrical shape which is a perfect circle when it is observed in a top view. A central axis of the trunk part 321 coincides with the rotation axis Ax1. The bottom part 322 is arranged on an opened surface at a side of the trunk part 321 and has a disc shape which is a perfect circle when it is observed in a top view. The bottom part 322 is arranged on an opened surface near the output side of the rotation axis Ax1, among a pair of opened surfaces of the trunk part 321. According to the above contents, the body part 32 achieves a cylindrical shape with bottom, i.e., a cup shape which is open on the input side of the rotation axis Ax1 by the whole of the trunk part 321 and the bottom part 322. In other words, the opened surface 35 is formed on an end surface at a side opposite to the bottom part 322 in the direction of the rotation axis Ax1 of the flexible external gear 3. That is, the flexible external gear 3 is a cylindrical shape with the opened surface 35 at a side in a tooth direction D1 (here, the input side of the rotation axis Ax1). The trunk part 321 and the bottom part 322 are integrally formed of a metal member, so that a seamless body part 32 may be achieved.

Here, the wave generator 4 is combined with the flexible external gear 3 by way of embedding the non-circular (elliptical) wave generator 4 in an inner side of the trunk part 321. Therefore, the flexible external gear 3 is subjected to an external force from the wave generator 4 in a radial direction (a direction orthogonal to the rotation axis Ax1) from the inner side toward the outer side, and thus is elastically deformed into a non-circular shape. The wave generator 4 is combined with the flexible external gear 3, so that the trunk part 321 of the flexible external gear 3 is elastically deformed into an elliptical shape. That is, a state where the flexible external gear 3 does not generate elastic deformation refers to a state where the wave generator 4 is not combined with the flexible external gear 3. On the contrary, a state where the flexible external gear 3 generates elastic deformation refers to a state where the wave generator 4 is combined with the flexible external gear 3.

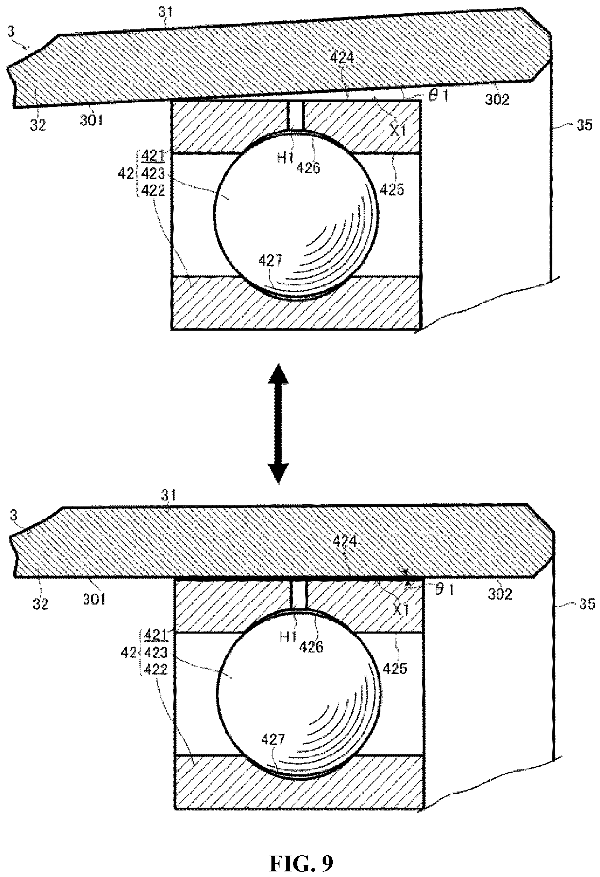

More specifically, the wave generator 4 is embedded into an end of the inner peripheral surface 301 of the trunk part 321 at a side opposite to the bottom part 322 (the input side of the rotation axis Ax1). In other words, the wave generator 4 is embedded into an end at the opened surface 35 side in the direction of the rotation axis Ax1, of the trunk part 321 of the flexible external gear 3. Therefore, in the state where the flexible external gear 3 generates elastic deformation, the flexible external gear 3 deforms greater at the end at the opened surface 35 side in the direction of the rotation axis Ax1, than an end at the bottom part 322 side, to form a shape closer to the elliptical shape. According to such different amount of deformation in the direction of the rotation axis Ax1, in the state where the flexible external gear 3 generates elastic deformation, the inner peripheral surface 301 of the trunk part 321 of the flexible external gear 3 comprises a tapering surface 302 inclined relative to the rotation axis Ax1 (referring to FIG. 9).

Furthermore, external teeth 31 are formed at least on an end of an outer peripheral surface of the trunk part 321 at a side opposite to the bottom part 322 (the input side of the rotation axis Ax1) in a circumferential direction of the trunk part 321. In other words, the external teeth 31 are arranged at least at an end at the opened surface 35 side in the direction of the rotation axis Ax1, of the trunk part 321 of the flexible external gear 3. Multiple teeth constituting the external teeth 31 all have the same shape, and are arranged at equal intervals in the whole area along a circumferential direction of the outer peripheral surface of the flexible external gear 3. That is, a pitch circle of the external tooth 31 is a perfect circle when it is observed in a top view, in the state where the flexible external gear 3 does not generate elastic deformation. The external teeth 31 are formed only in a certain width range from an end edge of the trunk part 321 on the opened surface 35 side (the input side of the rotation axis Ax1). Specifically, the external teeth 31 are formed at least on a part (end on the opened surface 35 side) of the trunk part 321 into which the wave generator 4 is embedded in the direction of the rotation axis Ax1, and on the outer peripheral surface of the trunk part 321. Tooth directions of the external teeth 31 are all parallel to the rotation axis Ax1.

In summary, in the harmonic gear device 1, any one of tooth directions of the internal teeth 21 of the rigid internal gear 2 and the external teeth 31 of the flexible external gear 3 is parallel to the rotation axis Ax1. Therefore, "tooth direction D1" is a direction parallel to the rotation axis Ax1. Furthermore, size of the internal tooth 21 in the tooth direction D1 is a tooth width of the internal tooth 21, and similarly, size of the external tooth 31 in the tooth direction D1 is a tooth width of the external tooth 31, thus the tooth direction D1 has the same meaning as a tooth width direction.

As described above, , rotation of the flexible external gear 3 is taken out as the output rotation. Therefore, the output part 102 of the actuator 100 is mounted to the flexible external gear 3 (referring to FIG. 4). Multiple mounting holes 33 are formed in the bottom part 322 of the flexible external gear 3, to mount a shaft used as the output part 102. Further, a penetration hole 34 is formed at the center of the bottom part 322. Wall of the bottom part 322 around the penetration hole 34 is thicker than walls of the bottom part 322 at other portions.

The flexible external gear 3 configured in this way is arranged at an inner side of the rigid internal gear 2. Here, the flexible external gear 3 is combined with the rigid internal gear 2 by way of inserting only an end of the outer peripheral surface of the trunk part 321 at a side opposite to the bottom part 322 (the input side of the rotation axis Ax1), into the inner side of the rigid internal gear 2. That is, a part (end on the opened surface 35 side) of the trunk part 321 of the flexible external gear 3 into which the wave generator 4 is embedded in the direction of the rotation axis Ax1, is inserted into the inner side of the rigid internal gear 2. Here, external teeth 31 are formed on the outer peripheral surface of the flexible external gear 3, and internal teeth 21 are formed on the inner peripheral surface of the rigid internal gear 2. Therefore, in a state where the flexible external gear 3 is arranged at the inner side of the rigid internal gear 2, the external teeth 31 and the internal teeth 21 face each other.

Here, tooth number of the internal teeth 21 of the rigid internal gear 2 is greater than tooth number of the external teeth 31 of the flexible external gear 3 by 2N (N is a positive integer). As an example, N is "1", so that the tooth number of (the external teeth 31 of) the flexible external gear 3 is greater than the tooth number of (the internal teeth 21 of) the rigid internal gear 2 by "2". Such difference between tooth numbers of the flexible external gear 3 and the rigid internal gear 2 specifies a deceleration ratio of output rotation relative to input rotation in the harmonic gear device 1.

Here, as an example, as shown in FIG. 1A and FIG. 1B, relative positions of the flexible external gear 3 and the rigid internal gear 2 in the direction of the rotation axis Ax1 are set by way of the center of the external tooth 31 in the tooth direction D1 facing the center of the internal tooth 21 in the tooth direction D1. That is, in the external teeth 31 of the flexible external gear 3 and the internal teeth 21 of the rigid internal gear 2, positions of centers in the tooth direction D1 are aligned with the same position in the direction of the rotation axis Ax1. Furthermore, the size (tooth width) of the external tooth 31 in the tooth direction D1 is greater than the size (tooth width) of the internal tooth 21 in the tooth direction D1. Therefore, in the direction parallel to the rotation axis Ax1, the internal teeth 21 converge in a range of the external teeth 31 in the tooth direction. In other words, the external teeth 31 protrude toward at least one side in the tooth direction D1, relative to the internal teeth 21. The external teeth 31 protrude toward two sides (the input side and the output side of the rotation axis Ax1) in the tooth direction D1, relative to the internal teeth 21.

Here, in the state where the flexible external gear 3 does not generate elastic deformation (a state where the flexible external gear 3 is not combined with the wave generator 4), the pitch circle of the external tooth 31 drawn as a perfect circle is set to be smaller than the pitch circle of the internal tooth 21 drawn as a perfect circle by one turn. That is, in the state where the flexible external gear 3 does not generate elastic deformation, the external teeth 31 and the internal teeth 21 face each other with a gap there-between, and are not meshed with each other.

On the other hand, in the state where the flexible external gear 3 generates elastic deformation (a state where the wave generator 4 is combined with the flexible external gear 3), since the trunk part 321 is flexed into an elliptical shape (non-circular shape), the external teeth 31 of the flexible external gear 3 are partially meshed with the internal teeth 21 of the rigid internal gear 2. That is, as shown in FIG. 2A, (at least an end, on the opened surface 35 side, of) the trunk part 321 of the flexible external gear 3 is elastically deformed into an elliptical shape, therefore the external teeth 31 located at two ends in a major axis direction of the elliptical shape are meshed with the internal teeth 21. In other words, a major diameter of the pitch circle of the external tooth 31 in the elliptical shape coincides with a diameter of the pitch circle of the internal tooth 21 in a perfect circle shape, and a minor diameter of the pitch circle of the external tooth 31 in the elliptical shape is smaller than the diameter of the pitch circle of the internal tooth 21 in a perfect circle shape. In this way, when the flexible external gear 3 generates elastic deformation, a part of multiple teeth constituting the external teeth 31 are meshed with a part of multiple teeth constituting the internal teeth 21. As seen from the result, in the harmonic gear device 1, a part of the external teeth 31 may be meshed with a part of the internal teeth 21.

The wave generator 4 is also referred to as a wave shape generator (wave generator), and it is a component enabling the flexible external gear 3 to generate flexure, thereby enabling the external teeth 31 of the flexible external gear 3 to generate harmonic motion. The wave generator 4 is a component of which an outer peripheral shape is non-circular shape, specifically an elliptical shape when it is observed in a top view.

The wave generator 4 is provided with a non-circular (here, elliptical) cam 41, and a bearing 42 mounted at an outer periphery of the cam 41. That is, the cam 41 and the bearing 42 are combined, so that the non-circular (elliptical) cam 41 is embedded in an inner side of the inner ring 422 of the bearing 42. Therefore, the bearing 42 is subjected to an external force from the cam 41 in a radial direction (a direction orthogonal to the rotation axis Ax1) from the inner side of the inner ring 422 toward the outer side, and thus is elastically deformed into a non-circular shape. That is, a state where the bearing 42 does not generate elastic deformation refers to a state where the cam 41 is not combined with the bearing 42. On the contrary, a state where the bearing 42 generates elastic deformation refers to a state where the cam 41 is combined with the bearing 42.

The cam 41 is a non-circular (here, elliptical) component which is rotatably driven with the rotation axis Ax1 at the input side as a center. The cam 41 is provided with an outer peripheral surface 411 (referring to FIG. 1B), and at least the outer peripheral surface 411 is formed of a metal plate with an elliptical shape when it is observed in a top view. The cam 41 has a specified thickness in the direction of the rotation axis Ax1 (that is, the tooth direction D1). Therefore, the cam 41 has rigidity equivalent to that of the rigid internal gear 2. However, thickness of the cam 41 is smaller (thinner) than that of the rigid internal gear 2. As described above, rotation of the wave generator 4 is used as the input rotation. Therefore, an input part 103 of the actuator 100 is mounted to the wave generator 4 (referring to FIG. 4). A cam hole 43 is formed at the center of the cam 41 of the wave generator 4, to mount a shaft used as the input part 103.

The bearing 42 is provided with an outer ring 421, an inner ring 422 and multiple rolling bodies 423. As an example, the bearing 42 is composed of a deep groove ball bearing using spherical balls as the rolling bodies 423.

Each of the outer ring 421 and the inner ring 422 is an annular component. Each of the outer ring 421 and the inner ring 422 is an annular component formed using a metal elastic body (metal plate) with a thin wall. That is, each of the outer ring 421 and the inner ring 422 has flexibility due to its relatively small (thin) thickness. Each of the outer ring 421 and the inner ring 422 has a circular ring shape which is a perfect circle when it is observed in a top view, in a state where the bearing 42 does not generate elastic deformation (the cam 41 is not combined with the bearing 42). The inner ring 422 is smaller than the outer ring 421 by one turn, and is arranged at an inner side of the outer ring 421. Here, since an inner diameter of the outer ring 421 is greater than an outer diameter of the inner ring 422, a gap is generated between an inner peripheral surface 425 of the outer ring 421 and an outer peripheral surface of the inner ring 422.

Multiple rolling bodies 423 are arranged in the gap between the outer ring 421 and the inner ring 422. Multiple rolling bodies 423 are arranged side-by-side in a circumferential direction of the outer ring 421. Multiple rolling bodies 423 are all metal balls (balls) with the same shape, and are arranged at equal intervals in the whole area along the circumferential direction of the outer ring 421. Although not particularly shown here, the bearing 42 is further provided with a cage, and multiple rolling bodies 423 are held between the outer ring 421 and the inner ring 422 by the cage.

Furthermore, as an example, size of each of the outer ring 421 and the inner ring 422 in a width direction (a direction parallel to the rotation axis Ax1) are the same as thickness of the cam 41. That is, the size of each of the outer ring 421 and the inner ring 422 in the width direction is smaller than thickness of the rigid internal gear 2.

With such structure of the bearing 42, the cam 41 is combined with the bearing 42, therefore the inner ring 422 of the bearing 42 is fixed to the cam 41, and the inner ring 422 is elastically deformed into an elliptical shape similar to an outer peripheral shape of the cam 41. At this time, the outer ring 421 of the bearing 42 is elastically deformed into an elliptical shape by being pressed by the inner ring 422 through multiple rolling bodies 423. Therefore, each of the outer ring 421 and the inner ring 422 of the bearing 42 is elastically deformed into an elliptical shape. In this way, in a state where the bearing 42 generates elastic deformation (a state where the cam 41 is combined with the bearing 42), the outer ring 421 and the inner ring 422 form elliptical shapes similar to each other.

Even in the state where the bearing 42 generates elastic deformation, since multiple rolling bodies 423 are interposed between the outer ring 421 and the inner ring 422, the gap between the outer ring 421 and the inner ring 422 is maintained to be substantially constant on the whole circumference of the outer ring 421. In this state, the outer ring 421 may relatively rotate relative to the inner ring 422 by rolling of multiple rolling bodies 423 between the outer ring 421 and the inner ring 422. Therefore, in the state where the bearing 42 generates elastic deformation, when the cam 41 rotates with the rotation axis Ax1 as a center, rotation of the cam 41 is not transmitted to the outer ring 421, while elastic deformation of the inner ring 422 is transmitted to the outer ring 421 through multiple rolling bodies 423. That is, in the wave generator 4, when the cam 41 rotates with the rotation axis Ax1 as a center, the outer ring 421 is elastically deformed by way of a major axis of an elliptical shape imitated by the outer ring 421 rotating with the rotation axis Ax1 as a center. Therefore, with regard to the wave generator 4 as a whole, the outer peripheral shape of the wave generator 4 formed into an elliptical shape as observed from the input side of the rotation axis Ax1 varies by way of a major axis thereof rotating with the rotation axis Ax1 as a center, with rotation of the cam 41.

The wave generator 4 configured in this way is arranged at an inner side of the flexible external gear 3. Here, the flexible external gear 3 is combined with the wave generator 4 by way of embedding only an end of the inner peripheral surface 301 of the trunk part 321 at a side opposite to the bottom part 322 (the opened surface 35 side), into the wave generator 4. At this time, the bearing 42 of the wave generator 4 is arranged between the outer peripheral surface 411 of the cam 41 and the inner peripheral surface 301 of the flexible external gear 3. Here, an outer diameter of the outer ring 421 in a state where the bearing 42 does not generate elastic deformation (a state where the cam 41 is not combined with the bearing 42) is the same as an inner diameter of the flexible external gear 3 (trunk part 321) in the same state where elastic deformation is not generated. Therefore, an outer peripheral surface 424 of the outer ring 421 in the wave generator 4 (referring to FIG. 5) is in contact with the inner peripheral surface 301 of the flexible external gear 3 over the whole circumference of the bearing 42 in the circumferential direction. Therefore, in a state where the flexible external gear 3 generates elastic deformation (a state where the wave generator 4 is combined with the flexible external gear 3), the trunk part 321 is flexed into an elliptical shape (non-circular shape). In this state, the flexible external gear 3 is fixed relative to the outer ring 421 of the bearing 42.

However, since the flexible external gear 3 and the wave generator 4 are embedding-fitted only, the flexible external gear 3 is not completely fixed to the outer ring 421 of the bearing 42. Therefore, as described above, a gap X1 is generated between the flexible external gear 3 and the outer ring 421 embedded in an inner side of the flexible external gear 3 (refer to FIG. 1B), although it is small. Strictly speaking, the diameter of the outer peripheral surface 424 of the outer ring 421 is slightly smaller than that of the inner peripheral surface 301 of the flexible external gear 3, therefore the gap X1 between the outer ring 421 and the flexible external gear 3 is not completely filled, so that the gap X1 is at least partially generated. Furthermore, influence of such gap X1 is also present, the outer ring 421 and the flexible external gear 3 generate elastic deformation with rotation of the cam 41 of the wave generator 4, and relative rotation may occur between the outer ring 421 and the flexible external gear 3. For example, this relative rotation is rotation at a few thousandths or a few hundredths of a rotation speed of the cam 41. However, the outer ring 421 and the flexible external gear 3 generate relative mutual friction due to such relative rotation, which is a reason of fretting wear.

"gap" stated in the application refers to a space that may be generated between opposing surfaces of two objects, and a gap may be generated between the two objects even though the two objects are not separated. In other words, even though two objects are in contact, there is a possibility that a gap may be generated between the two objects, although it is small. A gap X1 is formed between the flexible external gear 3 and the outer ring 421 embedded in an inner side of the flexible external gear 3, between the outer peripheral surface 424 of the outer ring 421 and the inner peripheral surface 301 of the flexible external gear 3 which face each other. However, since the outer peripheral surface 424 of the outer ring 421 is substantially in contact with the inner peripheral surface 301 of the flexible external gear 3, a large gap X1 is not generated there-between. Therefore, the gap X1 between the outer ring 421 and the flexible external gear 3 is a small gap which may be partially generated between the outer peripheral surface 424 of the outer ring 421 and the inner peripheral surface 301 of the flexible external gear 3. As an example, a microscopic gap X1 is generated between the outer peripheral surface 424 of the outer ring 421 and the inner peripheral surface 301 of the flexible external gear 3, to an extent that the lubricant Lb1 may permeate it.

As shown in FIG. 2A, in the harmonic gear device 1 configured as above, the trunk part 321 of the flexible external gear 3 is flexed into an elliptical shape (non-circular shape), so that the external teeth 31 of the flexible external gear 3 are partially meshed with the internal teeth 21 of the rigid internal gear 2. That is, (the trunk part 321 of) the flexible external gear 3 is elastically deformed into an elliptical shape, so that external teeth 31 located at two portions equivalent to two ends of the elliptical shape in a major axis direction are meshed with the internal teeth 21. Furthermore, when the cam 41 rotates with the rotation axis Ax1 as a center, rotation of the cam 41 is not transmitted to the outer ring 421 and the flexible external gear 3, while elastic deformation of the inner ring 422 is transmitted to the outer ring 421 and the flexible outer gear 3 through multiple rolling bodies 423. Therefore, the outer peripheral shape of the flexible external gear 3 formed into an elliptical shape as observed from the input side of the rotation axis Ax1 varies by way of a major axis thereof rotating with the rotation axis Ax1 as a center, with rotation of the cam 41.

As a result, harmonic motion occurs to the external teeth 31 formed on the outer peripheral surface of the flexible external gear 3. Due to occurrence of harmonic motion of the external teeth 31, the meshing positions of the internal teeth 21 and the external teeth 31 move in the circumferential direction of the rigid internal gear 2, so that relative rotation is generated between the flexible external gear 3 and the rigid internal gear 2. That is, since the external teeth 31 are meshed with the internal teeth 21 at two ends in a direction of the major axis of the elliptical shape formed by (the trunk part 321 of) the flexible external gear 3, the meshing positions of the internal teeth 21 and the external teeth 31 move by rotating the major axis of the elliptical shape with the rotation axis Ax1 as a center. In this way, with regard to the harmonic gear device 1, the flexible external gear 3 is deformed with rotation of the wave generator 4 with the rotation axis Ax1 as a center, so that a part of the external teeth 31 are meshed with a part of the internal teeth 21, to enable the flexible external gear 3 to rotate according to a difference between tooth numbers of the flexible external gear 3 and the rigid internal gear 2.

Furthermore, as described above, in the harmonic gear device 1, the difference between tooth numbers of the flexible external gear 3 and the rigid internal gear 2 specifies a deceleration ratio of output rotation to input rotation in the harmonic gear device 1. That is, in case that tooth number of the rigid internal gear 2 is set to "V1" and tooth number of the flexible external gear 3 is set to "V2", a deceleration ratio R1 is represented by Formula 1 below.$R 1 = V 2 / \left(V1-V2\right)$ (Formula 1)

In summary, the smaller the difference (V1-V2) between tooth numbers of the rigid internal gear 2 and the flexible external gear 3, the greater the deceleration ratio R1. As a n example, the tooth number V1 of the rigid internal gear 2 is "72", the tooth number V2 of the flexible external gear 3 is "70", and the difference (V1-V2) between tooth numbers thereof is "2", and thus the deceleration ratio R1 is "35" according to the above Formula 1. In this case, as observed from the input side of the rotation axis Ax1, when the cam 41 rotates clockwise by a circle (360 degrees) with the rotation axis Ax1 as a center, then the flexible external gear 3 rotates counterclockwise by only an amount equivalent to the difference "2" between tooth numbers (i.e., 10.3 degrees) with the rotation axis Ax1 as a center.

According to the harmonic gear device 1, such high deceleration ratio R1 may be achieved by a combination of primary gears (the rigid internal gear 2 and the flexible external gear 3).

Furthermore, it is feasible as long as the harmonic gear device 1 comprises at least the rigid internal gear 2, the flexible external gear 3, and the wave generator 4. For example, the harmonic gear device 1 may further comprise a spline bushing 113 described in the "(3.2) Actuator" column or the like, as constituent elements.

### (3.2) Actuator

Next, structures of the actuator 100 will be described in more detail.

As shown in FIG. 4, the actuator 100 comprises the harmonic gear device 1, a driving source 101, and an output part 102. That is, the actuator 100 comprises the driving source 101 and the output part 102, besides the rigid internal gear 2, the flexible external gear 3 and the wave generator 4 constituting the harmonic gear device 1. Furthermore, the actuator 100 comprises an input part 103, an input side housing 111, an output side housing 112, a spline bushing 113, a spacer 114, a first stopper 115, a second stopper 116 and a mounting plate 117, besides the harmonic gear device 1, the driving source 101, and the output part 102. Furthermore, the actuator 100 further comprises input side bearings 118, 119, an input side oil seal 120, output side bearings 121, 122, and an output side oil seal 123.

Materials of components of the actuator 100 except the driving source 101, the input side oil seal 120 and the output side oil seal 123 are stainless steel, cast iron, carbon steel for mechanical structure, chrome molybdenum steel, phosphor bronze, aluminum bronze, or other metals.

The driving source 101 is a power generation source such as a motor (electric machine), etc. Power generated by the driving source 101 is transmitted to the cam 41 of the wave generator 4 in the harmonic gear device 1. Specifically, the driving source 101 is connected to a shaft used as the input part 103, and the power generated by the driving source 101 is transmitted to the cam 41 through the input part 103. Therefore, the driving source 101 may rotate the cam 41.

The output part 102 is a cylindrical shaft arranged along the rotation axis Ax2 at the output side. A central axis used as an axis of the output part 102 coincides with the rotation axis Ax2. The output part 102 is held by the output side housing 112 to be rotatable with the rotation axis Ax2 as a center. The output part 102 is fixed to the bottom part 322 of the body part 32 of the flexible external gear 3, and rotates together with the flexible external gear 3 with the rotation axis Ax2 as a center. That is, the output part 102 takes rotation force of the flexible external gear 3 out as an output.

The input part 103 is a cylindrical shaft arranged along the rotation axis Ax1 at the input side. A central axis used as an axis of the input part 103 coincides with the rotation axis Ax1. The input part 103 is held by the input side housing 111 to be rotatable with the rotation axis Ax1 as a center. The input part 103 is mounted to the cam 41 of the wave generator 4, and rotates together with the cam 41 with the rotation axis Ax1 as a center. That is, the input part 103 transmits the power (rotation force) generated by the driving source 101 to the cam 41 as an input. As described above, the rotation axis Ax1 at the input side and the rotation axis Ax2 at the output side are located on the same straight line, thus the input part 103 and the output part 102 are located on the same axis.

The input side housing 111 holds the input part 103 through input side bearings 118 and 119, to enable the input part 103 to rotate. A pair of input side bearings 118 and 119 is arranged along the rotation axis Ax1 with an interval there-between. The shaft used as the input part 103 penetrates the input side housing 111, and a front end of the input part 103 protrudes from an end surface (right end surface in FIG. 4) of the input side housing 111 at the input side of the rotation axis Ax1. A gap between the end surface of the input side housing 111 at the input side of the rotation axis Ax1 and the input part 103 is blocked by the input side oil seal 120.

The output side housing 112 holds the output part 102 through output side bearings 121 and 122, to enable the output part 102 to rotate. A pair of output side bearings 121 and 122 is arranged along the rotation axis Ax2 with an interval there-between. The shaft used as the output part 102 penetrates the output side housing 112, and a front end of the output part 102 protrudes from an end surface (left end surface in FIG. 4) of the output side housing 112 at the output side of the rotation axis Ax1. A gap between the end surface of the output side housing 112 at the output side of the rotation axis Ax1 and the output part 102 is blocked by the output side oil seal 123.

Here, as shown in FIG. 4, the input side housing 111 and the output side housing 112 are combined with each other in a state of sandwiching the rigid internal gear 2 of the harmonic gear device 1 from two sides in the direction parallel to the rotation axis Ax1, i.e., the tooth direction D1. Specifically, the input side housing 111 is in contact with the rigid internal gear 2 from the input side of the rotation axis Ax1, and the output side housing 112 is in contact with the rigid internal gear 2 from the output side of the rotation axis Ax1. In this way, in a state where the rigid internal gear 2 is clamped between the input side housing 111 and the output side housing 112, the input side housing 111 and the output side housing 112 are fixed and fastened by screws (bolts) passing through multiple fixing holes 22. Therefore, the input side housing 111, the output side housing 112 and the rigid internal gear 2 are combined with each other, to form one piece. In other words, the rigid internal gear 2 together with the input side housing 111 and the output side housing 112 constitute an outer contour of the actuator 100.

The spline bushing 113 is a cylindrical component configured to connect the shaft used as the input part 103 to the cam 41. The spline bushing 113 is inserted into the cam hole 43 formed in the cam 41, and the shaft used as the input part 103 is inserted into the spline bushing 113 by way of passing through the spline bushing 113. Here, movement of the spline bushing 113 relative to both the cam 41 and the input part 103 is limited in a rotation direction with the rotation axis Ax1 as a center, and the spline bushing 113 is at least movable relative to the input part 103 in the direction parallel to the rotation axis Ax1. Therefore, a spline connection structure may be achieved, as a connection structure between the input part 103 and the cam 41. Therefore, the cam 41 may move along the rotation axis Ax1 relative to the input part 103, and rotate together with the input part 103 with the rotation axis Ax1 as a center.

The spacer 114 is a component filling a gap between the spline bushing 113 and the cam 41. The first stopper 115 is a component preventing the spline bushing 113 from falling off the cam 41. For example, the first stopper 115 is composed of an E-ring, and is mounted at a position of the spline bushing 113 on the input side of the rotation axis Ax1 when it is observed from the cam 41. The second stopper 116 is a component preventing the input part 103 from falling off the spline bushing 113. For example, the second stopper 116 is composed of an E-ring, and is mounted to the input part 103 by way of contacting with the spline bushing 113 from the output side of the rotation axis Ax1.

The mounting plate 117 is a component configured to mount the shaft used as the output part 102 to the bottom part 322 of the flexible external gear 3. Specifically, in a state where a part around the penetration hole 34 in the bottom part 322 is clamped between the mounting plate 117 and a flange part of the output part 102, the mounting plate 117 and the flange part are fixed and fastened by screws (bolts) passing through multiple mounting holes 33. Therefore, the shaft used as the output part 102 is fixed to the bottom part 322 of the flexible external gear 3.

However, the lubricant Lb1 is sealed at an inner side of the outer contour of the actuator 100 composed of the input side housing 111, the output side housing 112 and the rigid internal gear 2. That is, there is a "lubricant reservoir" capable of storing the lubricant Lb1 in a liquid or gel-like state, in a space surrounded by the input side housing 111, the output side housing 112 and the rigid internal gear 2.

That is, in the harmonic gear device 1, for example, the lubricant Lb1 in a liquid or gel-like state is injected into meshing portions of the internal teeth 21 and the external teeth 31, between the outer ring 421 and the inner ring 422 of the bearing 42, etc. As an example, the lubricant Lb1 is liquid lubrication oil (oil liquid). Furthermore, when the harmonic gear device 1 is used, the lubricant Lb1 also enters the gap X1 between the outer ring 421 (outer peripheral surface 424) of the bearing 42 and the flexible external gear 3.

As shown in FIG. 4, , as an example, the lubricant Lb1 is stored only at a lower part of the outer contour of the actuator 100 (a lower part in a vertical direction) by way of level of the lubricant Lb1 being located to be lower than lower ends of the output side bearings 121 and 122. Therefore, with regard to the external teeth 31, the outer ring 421 of the bearing 42, or the like, only a part of them in the rotation direction is immersed in the lubricant Lb1 in a state of FIG. 4. When the output part 102 rotates from this state with rotation of the input part 103, the outer ring 421 and the flexible external gear 3 also rotate around the rotation axis Ax1, and as a result, the external teeth 31, the outer ring 421 of the bearing 42, or the like are immersed in the lubricant Lb1 in the whole rotation direction.

### (3.3) Joint device for a robot

Next, the structure of the joint device for a robot 130 will be described in more detail.

As shown in FIG. 4, the joint device for a robot comprises the harmonic gear device 1, a first member 131, and a second member 132. That is, the joint device for a robot 130 comprises the first member 131 and the second member 132 besides the rigid internal gear 2, the flexible external gear 3 and the wave generator 4 constituting the harmonic gear device 1.

The first member 131 is a member fixed to the rigid internal gear 2, the second member 132 is a member fixed to the flexible external gear 3. As a result, in the harmonic gear device 1, relative rotation is generated between the flexible external gear 3 and the rigid internal gear 2, therefore relative rotation is generated between the first member 131 and the second member 132. In this way, the joint device for a robot 130 constitutes a connection portion when two or more members (the first member 131 and the second member 132) are connected in a mutually movable state (movably connected) through the harmonic gear device 1.

Here, it is enough as long as the first member 131 and the second member 132 may be directly or indirectly fixed to the rigid internal gear 2 and the flexible external gear 3 respectively. In the example of FIG. 4, the first member 131 is indirectly connected (fixed) to the rigid internal gear 2 by being connected to the output side housing 112. Similarly, the second member 132 is indirectly connected (fixed) to the flexible external gear 3 by being connected to the output part 102.

In the joint device for a robot 130 configured in this way, for example, when the cam 41 of the wave generator 4 rotates by the power generated by the driving source 101, relative rotation is generated between the flexible external gear 3 and the rigid internal gear 2. Furthermore, with the relative rotation of the flexible external gear 3 and the rigid internal gear 2, relative rotation is generated between the first member 131 and the second member 132 with the rotation axis Ax2 at the output side (coaxial with the rotation axis Ax1 at the input side) as a center. As a result, according to the joint device for a robot 130, the first member 131 and the second member 132 connected through the harmonic gear device 1 may be driven to relatively rotate with the rotation axis Ax1 as a center. Therefore, the joint device for a robot 130 may achieve various kinds of joint mechanisms of robots.

### (4) Detailed structure of each part

Next, a more detailed structure of each part of the harmonic gear device 1 will be described in more detail with reference to FIG. 1A to FIG. 2B and FIG. 5 to FIG. 8B.

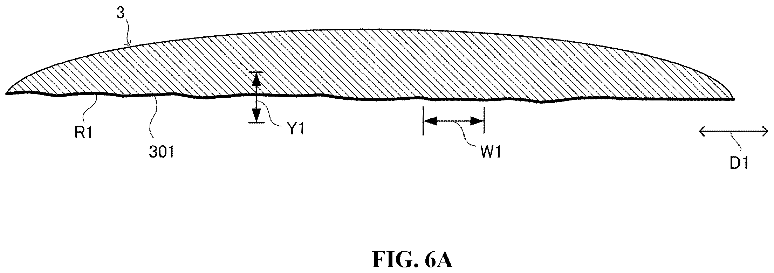

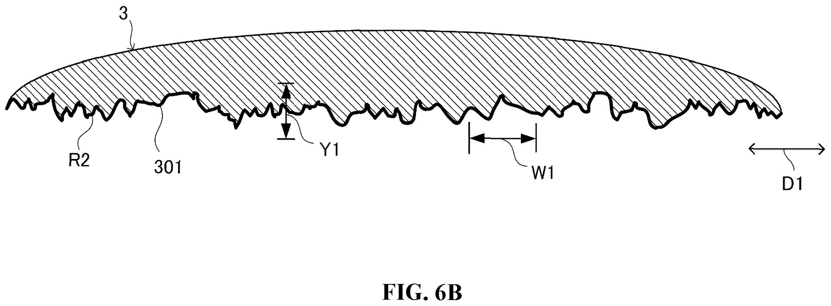

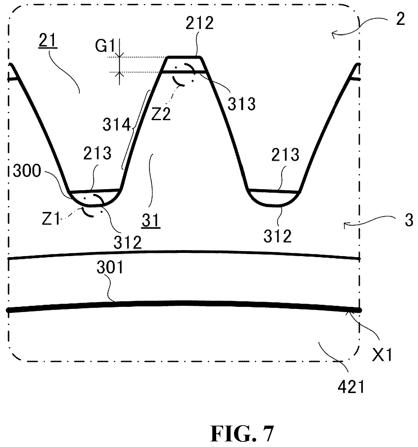

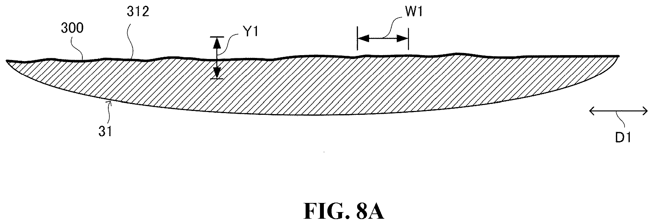

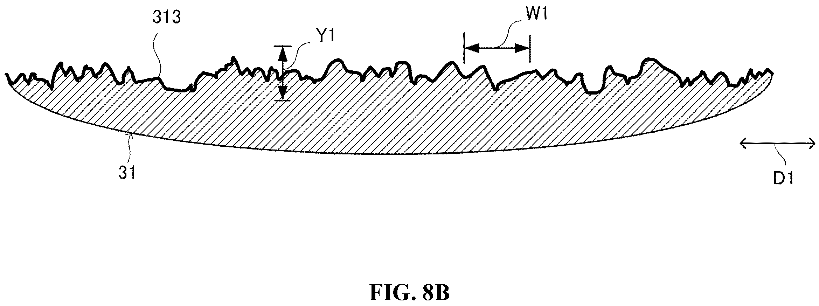

FIG. 5 is a diagrammatic cross-sectional view obtained by enlarging main parts in a range corresponding to FIG. 1B. FIG. 6A is a diagrammatic view showing a surface state of the inner peripheral surface 301 of the flexible external gear 3 in a region Z1 of FIG. 5. FIG. 6B is a diagrammatic view showing a surface state of the inner peripheral surface 301 of the flexible external gear 3 in a region Z2 of FIG. 5. FIG. 7 is a diagrammatic enlarged view of a region Z1 of FIG. 2B. FIG. 8A is a diagrammatic diagram showing a surface state of external teeth 31 in a region Z1 of FIG. 7. FIG. 8B is a diagrammatic diagram showing a surface state of external teeth 31 in a region Z2 of FIG. 7.

### (4.1) Through hole

As shown in FIG. 1A and FIG. 1B, at least one of the outer ring 421 of the bearing 42 or the external teeth 31 of the flexible external gear 3 is provided with a through hole H1. The through hole H1 penetrates at least one of the outer ring 421 of the bearing 42 or the external teeth 31 of the flexible external gear 3 in the radial direction, and is connected to the gap X1 between the outer ring 421 and the flexible external gear 3. That is, at least one of the inner peripheral surface 425 (referring to FIG. 5) of the outer ring 421 of the bearing 42 used as a rolling surface of multiple rolling bodies 423 or the outer peripheral surface of the external teeth 31 of the flexible external gear 3 used as a meshed surface with the internal teeth 21 is communicated with the gap X1 through the through hole H1. Therefore, the lubricant Lb1 may be supplied to the gap X1 between the outer ring 421 and the flexible external gear 3 through the through hole H1.

That is, by providing the through hole H1, the harmonic gear device 1 may supply the lubricant Lb1 to the contact portion of the flexible external gear 3 and the wave generator 4 through the through hole H1, thereby maintaining sufficient lubricant Lb1 at the contact portion. As a result, "lubricant depletion" is prevented, a surface of a contact portion of the outer ring 421 and the flexible external gear 3 is formed in a state where it is covered with the lubricant Lb1, so that occurrence of fretting wear is suppressed. Therefore, in the harmonic gear device 1, it is difficult to generate bad conditions caused by fretting wear between the outer ring 421 and the flexible external gear 3, and it is possible to provide the harmonic gear device 1 of which reliability is difficult to reduce.

However, it is enough as long as the through hole H1 is arranged in at least one of the outer ring 421 or the external teeth 31 of the flexible external gear 3. In the application, when through holes H1 arranged in the outer ring 421 and the external teeth 31 of the flexible external gear 3 respectively are distinguished, the through hole H1 arranged in the outer ring 421 is referred to as a "first through hole", and a through hole H2 (referring to FIG. 17B) arranged in the external teeth 31 of the flexible external gear 3 is referred to as a "second through hole". As an example, the through hole H1 is arranged only in the outer ring 421 from the outer ring 421 and the external teeth 31 of the flexible external gear 3. In other words, the through hole H1 comprises the "first through hole" arranged in the outer ring 421. On the other hand, a through hole H2 (second through hole) on the external teeth 31 side of the flexible external gear 3 will be described .

Furthermore, "penetrating in the radial direction" stated in the application refers to penetrating in the radial direction, i.e., a direction orthogonal to the rotation axis Ax1, that is, penetrating radially. That is, as long as the through hole H1 is arranged in the outer ring 421, it is enough for the through hole H1 to only penetrate between two surfaces of the outer ring 421 in the radial direction, i.e., the inner peripheral surface 425 and the outer peripheral surface 424. For example, the through hole H1 may also be inclined relative to the radial direction.

Here, shape and size of the through hole H1 will be first described with reference to FIG. 5.

The through hole H1 (first through hole) arranged in the outer ring 421 penetrates the outer ring 421 in the radial direction. Therefore, an opened surface at a side of the through hole H1 faces the gap X1 between the outer ring 421 and the flexible external gear 3, and an opened surface at another side of the through hole H1 opens to the inner peripheral surface 425 of the outer ring 421. Therefore, an end of the through hole H1 is connected to the gap X1 between the outer ring 421 and the flexible external gear 3, and another end of the through hole H1 is connected to a space between the inner peripheral surface 425 of the outer ring 421 and the outer peripheral surface of the inner ring 422. Therefore, the space between the inner peripheral surface 425 of the outer ring 421 and the outer peripheral surface of the inner ring 422 where multiple rolling bodies 423 are arranged, is communicated with the gap X1 between the outer ring 421 and the flexible external gear 3 through the through hole H1.

Furthermore, the through hole H1 is a circular hole of which a cross section orthogonal to the radial direction has a circular (perfect circle) shape. As an example, a center line of the through hole H1 is parallel to the radial direction. That is, the through hole H1 is a hole extending straight in the radial direction from the inner peripheral surface 425 to the outer peripheral surface 424 of the outer ring 421. Furthermore, the shape of the cross section orthogonal to the radial direction of the through hole H1 is the same in a range of the whole length of the through hole H1 in the radial direction. That is, a cylindrical space is formed at interior of the through hole H1.

Here, a diameter ϕ1 (referring to FIG. 5) of the through hole H1 is a smaller one of 0.1 times or less or 1.0 times or less of a diameter ϕ2 (referring to FIG. 5) of each of multiple rolling bodies 423. The diameter ϕ1 of the through hole H1 stated here refers to a diameter of the through hole H1 in case that the shape of the cross section of the through hole H1 is a perfect circle, or refers to size in a direction of the minor axis of the through hole H1 in case that the shape of the cross section of the through hole H1 is a non-circular shape (such as an elliptical shape). As an example, the diameter ϕ1 of the through hole H1 is 0.1 times or less and 1.0 times or less of the diameter ϕ2 of the rolling body 423. According to such diameter ϕ1 of the through hole H1, the lubricant Lb1 may be efficiently supplied to the gap X1 between the outer ring 421 and the flexible external gear 3 through the through hole H1.

According to the above structure, the space between the outer ring 421 and the inner ring 422 is communicated with the gap X1 between the outer ring 421 and the flexible external gear 3 through the through hole H1, therefore the lubricant Lb1 between the outer ring 421 and the inner ring 422 is supplied to the gap X1 through the through hole H1. In FIG. 5, flow of the lubricant Lb1 in the through hole H1 is schematically indicated by dotted arrows. In particular, when the bearing 42 operates and multiple rolling bodies 423 rotate, the rolling bodies 423 function as a pump and may send the lubricant Lb1 between the outer ring 421 and the inner ring 422 into the gap X1 through the through hole H1. As a result, "lubricant depletion" in which the lubricant Lb1 is insufficient or exhausted at the contact portion of the outer ring 421 and the flexible external gear 3 is prevented, and occurrence of fretting wear is easily suppressed.

In summary, the harmonic gear device 1 comprises a pump structure which supplies the lubricant Lb1 to the gap X1 through the through hole H1 when the flexible external gear 3 relatively rotates relative to the rigid internal gear 2. When the flexible external gear 3 relatively rotates relative to the rigid internal gear 2, multiple rolling bodies 423 of the bearing 42 roll in the circumferential direction of the outer ring 421, therefore multiple rolling bodies 423 function as a pump as described above. That is, multiple rolling bodies 423 constitute a pump structure. In particular, the rolling bodies 423 roll in the space between the outer ring 421 and the inner ring 422, so that pressure in the space between the outer ring 421 and the inner ring 422 is increased, therefore the lubricant Lb1 between the outer ring 421 and the inner ring 422 is extruded to the gap X1 side through the through hole H1. In this way, the rolling bodies 423 constitute a positive displacement pump such as a vane pump, to extrude the lubricant Lb1 to the gap X1 side with a sufficient pressure, so that it is easy to supply sufficient lubricant Lb1 into the gap X1.

Furthermore, an opened surface of the through hole H1 on the inner peripheral surface 425 side of the outer ring 421 opens to a bottom surface of the rolling groove 426 formed in the inner peripheral surface 425 of the outer ring 421. That is, a rolling groove 426 extending in the circumferential direction over the whole circumference of the outer ring 421 is formed at the center of the inner peripheral surface 425 of the outer ring 421 in a width direction (tooth direction D1), and multiple rolling bodies 423 roll along the rolling groove 426. A similar rolling groove 427 is formed in the outer peripheral surface of the inner ring 422, and multiple rolling bodies 423 are held between these rolling grooves 426 and 427 facing each other by way of being sandwiched between these rolling grooves 426 and 427. Furthermore, the through hole H1 is arranged in a range where the rolling groove 426 is formed in the width direction (tooth direction D1) of the outer ring 421, by way of opening to the bottom surface of the rolling groove 426 of the outer ring 421.

Further, the through hole H1 is arranged at the same position as the center of multiple rolling bodies 423 in the direction (tooth direction D1) parallel to the rotation axis Ax1. In other words, the through hole H1 is arranged at the center of the rolling groove 426 in the width direction (tooth direction D1) of the outer ring 421. According to this structure, the center of multiple rolling bodies 423 passes through the opened surface of the through hole H1, and when the rolling bodies 423 rotate, the rolling bodies 423 efficiently function as a pump, so that it is easy to send the lubricant Lb1 into the gap X1 through the through hole H1. Further, it may be seen that the outer ring 421 is in contact with the flexible external gear 3 mainly at two ends of the outer ring 421 in the width direction (tooth direction D1). Therefore, the through hole H1 is formed at the center of the outer ring 421 in the width direction (tooth direction D1), so that when the outer ring 421 is in contact with the flexible external gear 3, it is difficult to reduce strength of the outer ring 421 due to the through hole H1.

Here, as shown in FIG. 5, each of rolling grooves 426 and 427 is formed in an arc shape in a cross section orthogonal to the circumferential direction of the outer ring 421. Furthermore, curvature of the arc shape of the cross section of each of the rolling grooves 426 and 427 is greater than curvature of each of multiple rolling bodies 423. In other words, a radius of curvature of the arc shape of the cross section of each of the rolling grooves 426 and 427 is smaller than a radius of curvature of the rolling body 423. Therefore, in a state where multiple rolling bodies 423 are held between the rolling grooves 426 and 427 by way of being sandwiched between the rolling grooves 426 and 427, a certain amount of gap is ensured between bottom surfaces of the rolling grooves 426 and 427 and surface of respective rolling bodies 423. In other words, as shown in FIG. 5, a total of four points of each rolling body 423, i.e., two end edges in a width direction (tooth direction D1) of the rolling groove 426 of the outer ring 421 and two end edges in a width direction (tooth direction D1) of the rolling groove 427 of the inner ring 422, are supported. However, in practice, since load in a thrust direction (a direction parallel to the rotation axis Ax1) is relatively applied between the outer ring 421 and the inner ring 422, the rolling body 423 is supported by a pair of end edges which are obliquely opposed to each other.

Therefore, the opened surface of the through hole H1 formed in the bottom surface of the rolling groove 426 faces surfaces of the rolling bodies 423 through the gap. In summary, in the radial direction, a distance above a specified value is ensured between tracks of multiple rolling bodies 423 and the opened surface on the inner peripheral surface 425 side of the outer ring 421, of the (first) through hole H1 arranged in the outer ring 421. That is, even in a state where the rolling body 423 exists at a position corresponding to the through hole H1, a distance (gap) above the specified value is ensured between the opened surface of the through hole H1 and the rolling body 423, and the through hole H1 is not closed by the rolling body 423. Therefore, when multiple rolling bodies 423 roll, even though the rolling bodies 423 pass through the through hole H1, they do not collide with the opened edge of the through hole H1. As a result, when the rolling bodies 423 pass through the through hole H1, impact caused by the rolling bodies 423 colliding with the opened edge of the through hole H1 may be prevented, and it is easy to protect the outer ring 421, the rolling bodies 423, or the like from the impact.

### (4.2) Number and arrangement of through holes

Next, the number and arrangement of through holes H1 will be described with reference to FIG. 2A and FIG. 2B.

As shown in FIG. 2A, the through holes H1 comprise multiple first through holes arranged in the outer ring 421 by way of arranging in the circumferential direction of the outer ring 421. The through holes H1 are composed only of the first through holes arranged in the outer ring 421, therefore all the through holes H1 are arranged in the circumferential direction of the outer ring 421.As an example, three through holes H1 are arranged in the outer ring 421. Therefore, the lubricant Lb1 may be supplied to the gap X1 between the outer ring 421 and the flexible external gear 3 through the through hole H1, at multiple portions (three portions) in the circumferential direction of the outer ring 421. As a result, it becomes easier to supply the lubricant Lb1 over the whole area at the gap X1 in the circumferential direction of the outer ring 421, compared to a situation where the through hole H1 is arranged at only one portion in the circumferential direction of the outer ring 421.

Here, as shown in FIG. 2A, an interval P1 of multiple through holes H1 (first through holes) is a value other than a multiple of an interval P2 of multiple rolling bodies 423. As an example, the bearing 42 is provided with 26 rolling bodies 423, and provided with 3 through holes H1 in the outer ring 421. Furthermore, the 26 rolling bodies 423 and the 3 through holes H1 are arranged at equal intervals (equal spacing) in the circumferential direction of the outer ring 421 respectively. Therefore, the interval P1 of the 3 through holes H1 in the circumferential direction of the outer ring 421 is 120 degrees (= 360 degrees ÷ 3), and the interval P2 of the 26 rolling bodies 423 in the circumferential direction of the outer ring 421 is 13.85 degrees (= 360 degrees ÷26). Here, the interval P1 is a value indicating a distance between centers of two adjacent through holes H1 in the circumferential direction of the outer ring 421, by an angle around the rotation axis Ax1. Similarly, the interval P2 is a value indicating a distance between centers of two adjacent rolling bodies 423 in the circumferential direction of the outer ring 421, by an angle around the rotation axis Ax1. In order that even though the interval P2 (13.85 degrees) of multiple rolling bodies 423 is multiplied by any integer, a result as such does not coincide with the interval P1 (120 degrees) of multiple through holes H1, then the interval P1 is set to be a value which cannot be exactly divided by the interval P2.

Therefore, the rolling bodies 423 do not simultaneously exist at positions corresponding to all the through holes H1. That is, in a state where one rolling body 423 is located at a position corresponding to one through hole H1, the rolling bodies 423 are not located at positions corresponding to other two through holes H1. Therefore, in the harmonic gear device 1, it is possible to prevent relatively large impact which may occur when multiple rolling bodies 423 are simultaneously embedded into (or pulled out of) multiple through holes H1, and it is easy to protect the outer ring 421, rolling bodies 423 or the like from impact. Furthermore, a pump action based on rolling of the rolling bodies 423 is also efficient, compared to a situation where the rolling bodies 423 are located on all the through holes H1.

### (4.3) Surface state of the inner peripheral surface of the flexible external gear

Next, the surface state of the inner peripheral surface 301 of the flexible external gear 3 will be described with reference to FIG. 5, FIG. 6A and FIG. 6B.

As described above, the first region R1 located at the back side of the external teeth 31 in the inner peripheral surface 301 of the flexible external gear 3 is formed to have a surface roughness smaller than that of the second region R2 except the first region R1. That is, the inner peripheral surface 301 of the flexible external gear 3 comprises the first region R1 and the second region R2 with mutually different surface roughness. Furthermore, as shown in FIG. 5, the first region R1 is arranged at least on a portion at the back side of the external teeth 31 in the inner peripheral surface 301. The surface roughness of the first region R1 is smaller than that of the second region R2, that is, the first region R1 has a smoother surface state. The bearing 42 of the wave generator 4 is in contact with the first region R1 arranged on a portion at the back side of the external teeth 31 in this way.

In summary, the gap X1 is generated between the first region R1 in the inner peripheral surface 301 of the flexible external gear 3 and the outer ring 421 of the bearing 42 embedded at an inner side of the flexible external gear 3, although it is small. Occurrence of fretting wear at the contact portion of the flexible external gear 3 and the outer ring 421 is suppressed by enabling the lubricant Lb1 to permeate in the gap X1. That is, the lubricant Lb1 is held between the first region R1 and the outer peripheral surface 424 of (the bearing 42 of) the wave generator 4. Furthermore, as in the first region R1, the inner peripheral surface 301 of the flexible external gear 3 is formed in a partially smooth surface state, so that it is easy for the lubricant Lb1 to stay at the contact portion of the flexible external gear 3 with the wave generator 4, and sufficient lubricant Lb1 may be maintained at the contact portion.

Furthermore, the first region R1 is arranged over the whole region of a surface facing the outer peripheral surface 424 of (the bearing 42 of) the wave generator 4, at least in a direction (tooth direction D1) parallel to the rotation axis Ax1. That is, as shown in FIG. 5, the whole region of a surface facing the outer peripheral surface 424 of the bearing 42, of the inner peripheral surface 301 of the flexible external gear 3 has a smooth surface state as the first region R1. As a result, the contact portion of the inner peripheral surface 301 of the flexible external gear 3 and the wave generator 4 is formed in a state of being covered with the lubricant Lb1, and occurrence of fretting wear is suppressed.

Here, the first region R1 is not formed for example by shearing metal crystalline grains like cutting processing, instead, formed by not shearing metal crystalline grains (by rolling processing). Therefore, the first region R1 arranged at least on a portion at the back side of the external teeth 31 in the inner peripheral surface 301, is formed in a smooth surface state where metal crystalline grains are not sheared. On the other hand, the second region R2 with a relatively large surface roughness is formed for example by shearing metal crystalline grains such as cutting, grinding or honing processing. Therefore, the second region R2 in the inner peripheral surface 301 is formed in a surface state where metal crystalline grains are sheared. That is, the first region R1 is a rolling surface, and the second region R2 is a cutting surface. In this way, surface roughness of the first region R1 and the second region R2 may be easily adjusted by using different processes in the first region R1 and the second region R2.

Furthermore, the first region R1 is arranged at an end edge on the opened surface 35 side in the direction of the rotation axis Ax1, of the inner peripheral surface 301 of the flexible external gear 3. That is, the flexible external gear 3 has a cylindrical shape with the opened surface 35 at a side in the tooth direction D1 of the external teeth 31 (here, the input side of the rotation axis Ax1). The first region R1 is connected to the opened surface 35. In this way, the first region R1 is arranged at the end edge on the opened surface 35 side, so that when the wave generator 4 is embedded into the flexible external gear 3 from the opened surface 35 side, it is difficult for a situation where the wave generator 4 is stuck on the inner peripheral surface 301 of the flexible external gear 3.

As shown in FIG. 6A where a part of the inner peripheral surface 301 of the flexible external gear 3 (region Z1 in FIG. 5) is enlarged, the first region R1 is mainly formed in a smooth surface state where crystalline grains are not sheared. In contrast, as shown in FIG. 6B where a part of the inner peripheral surface 301 of the flexible external gear 3 (region Z2 in FIG. 5) is enlarged, the second region R2 is mainly formed in a surface state where crystalline grains are sheared. As an example, "surface roughness" is a value obtained from an arithmetic average roughness (Ra) in the direction (tooth direction D1) parallel to the rotation axis Ax1. As shown in FIG. 6A and FIG. 6B, in case that a unit length W1 (0.25 mm, as an example) in the tooth direction D1 and a unit length Y1 (1 µm, as an example) in a direction of longitudinal magnification are specified, the surface roughness of the first region R1 is smaller than that of the second region R2.

Here, the surface roughness of the first region R1 is preferably 1/40 times or more and 1/10 times or less of the surface roughness of the second region R2. The surface roughness of the first region R1 is not limited to 1/40 times or more of the surface roughness of the second region R2, for example, it may be 1/80 times or more, 1/50 times or more, 1/30 times or more, or 1/20 times or more of the surface roughness of the second region R2, etc. Similarly, the surface roughness of the first region R1 is not limited to 1/10 times or less of the surface roughness of the second region R2, for example, it may be 1/2 times or less, 1/5 times or less, 1/16 times or less, or 1/20 times or less of the surface roughness of the second region R2, etc. In this way, the surface roughness of the first region R1 is a value sufficiently smaller than that of the second region R2, therefore it is easy for the lubricant Lb1 to stay in the first region R1. As an example, the surface roughness of the first region R1 is preferably not less than Ra0.01 and not more than Ra0.1, and in this case, it is preferably 1/10 times or less of the surface roughness (Ra) of the second region R2.

That is, in the second region R2 formed for example by performing processing of shearing crystalline grains of metallic structure like cutting, grinding or honing processing on the inner peripheral surface 301 of the flexible external gear 3, scaly "burrs" (convex parts) are generated at a crystalline boundary. On the other hand, in the first region R1 formed for example by performing processing of not shearing crystalline grains of metallic structure like rolling processing on the inner peripheral surface 301 of the flexible external gear 3, such scaly "burrs" are not generated, instead, a smooth surface state is achieved. However, "surface roughness" is not limited to the arithmetic average roughness (Ra) in the direction (tooth direction D1) parallel to the rotation axis Ax1. For example, "surface roughness" may be an arithmetic average roughness (Ra) or a maximum height (Ry) of the flexible external gear 3 in the circumferential direction, a ten-point average roughness (Rz), an average interval of concavities and convexities (Sm), an average interval of local peaks (S), or a load length rate (tp), etc.

Furthermore, in order for the lubricant Lb1 to easily permeate in the gap X1 between the flexible external gear 3 and the outer ring 421, it is preferable that at least the first region R1 of the inner peripheral surface 301 of the flexible external gear 3 and the outer peripheral surface 424 of the outer ring 421 are not oil-proof.

### (4.4) Surface state of external teeth

Next, the surface state of the external teeth 31 will be described with reference to FIG. 7, FIG. 8A and FIG. 8B.

As described above, the rolling surface 300 (first rolling surface) which is formed by processing (rolling processing) of not shearing metal crystalline grains is arranged on the external teeth 31. Therefore, as shown in FIG. 7, the rolling surface 300 comprised in the external teeth 31 is formed in a smooth surface state where metal crystalline grains are not sheared. Therefore, friction of the external teeth 31 with the internal teeth 21 is reduced, loss due to friction of the external teeth 31 with the internal teeth 21 is reduced, and it is difficult to reduce power transmission efficiency of the harmonic gear device 1.

Especially, the rolling surface 300 is only arranged on the external teeth 31 from the external teeth 31 and the internal teeth 21. According to the invention, the rolling surface 300 is arranged at least on the external teeth 31, and has a surface roughness smaller than that of the internal teeth 21. The rolling surface 300 is a surface formed by processing (rolling processing) of not shearing metal crystalline grains, therefore for example, compared to the internal teeth 21 formed by processing of shearing metal crystalline grains like cutting, grinding or honing processing, the surface roughness of the rolling surface 300 is smaller certainly. Furthermore, the rolling surface 300 with such smooth surface state is arranged on the external teeth 31 pressed like wedges relative to the internal teeth 21 of the rigid internal gear 2, friction of the external teeth 31 with the internal teeth 21 is further reduced.

Furthermore, the rolling surface 300 can be arranged only on the external teeth 31 in the outer peripheral surface of (the trunk part 321 of) the flexible external gear 3. That is, the external teeth 31 are arranged on the outer peripheral surface of the flexible external gear 3, and portions of the outer peripheral surface of the flexible external gear 3 except the external teeth 31 are formed for example by processing of shearing metal crystalline grains like cutting, grinding or honing processing. Therefore, the rolling surface 300 of the external teeth 31 has a smaller surface roughness than that of portions of the outer peripheral surface of the flexible external gear 3 except the external teeth 31. Therefore, it is enough for rolling processing to be performed on only a required portion of the outer peripheral surface of the flexible external gear 3, which has a advantage of improving processability.

Here, the rolling surface 300 is arranged on a portion of at least one of the external teeth 31 except tooth crests 313. That is, as shown in FIG. 7, the external tooth 31 is a provided with a tooth root 312, a tooth crest 313, and a middle part 314 in a tooth height direction, while the rolling surface 300 of the external tooth 31 is arranged on a portion except the tooth crest 313 (the tooth root 312, the middle part 314, etc.). The rolling surface 300 is only the tooth root 312 and the middle part 314 in the tooth height direction on surface of the external tooth 31, and the tooth crest 313 is formed for example by processing of shearing metal crystalline grains like cutting, grinding or honing processing. Therefore, the rolling surface 300, i.e., surface of the tooth root 312 and the middle part 314 in the tooth height direction has a smaller surface roughness than that of the tooth crest 313 which is not the rolling surface 300. Therefore, the rolling surface 300 (the surface of the tooth root 312 and the middle part 314 in the tooth height direction) is equivalent to the first region R1 in the inner peripheral surface 301 of the flexible external gear 3, and the surface of the tooth crest 313 which is not the rolling surface 300, is equivalent to the second region R2.

In this way, the rolling surface 300 is arranged on the portion except the tooth crest 313 (the tooth root 312, the middle part 314, etc.), so that it is easy to reduce friction of the external teeth 31 with the internal teeth 21. In summary, as shown in FIG. 7, even in a state where the internal teeth 21 are meshed with the external teeth 31, a gap G1 is ensured between tooth crests 313 of the external teeth 31 and tooth roots 212 of the internal teeth 21. Furthermore, the external teeth 31 are in contact with the internal teeth 21 by using the portion except the tooth crest 313 (the tooth root 312, the middle part 314, etc.), therefore it is easy to reduce friction of the external teeth 31 with the internal teeth 21 by arranging the rolling surface on the portion except the tooth crest 313.

Furthermore, the rolling surface 300 comprises a tooth direction trimming part 310 (referring to FIG. 1B) arranged on an end of at least one side in the tooth direction D1. "tooth direction trimming" stated in the application refers to trimming in the tooth direction D1, and the tooth direction trimming part 310 of the external tooth 31 is a portion of the external tooth 31 where tooth direction trimming is performed. According to tooth direction trimming, it is possible to give an intentional bulge to a regular tooth direction shape of a gear, or to change a helix angle. Representative processing for tooth direction trimming comprises convex surface processing and shovel tooth processing (end undulation). The convex surface processing is processing toward a central part of the gear in the tooth direction D1 to enable the central part of the gear in the tooth direction D1 to be convex, so that the central part is provided with a filleted corner. The shovel tooth processing is a processing method in which two ends in the tooth direction D1 are appropriately avoided. The convex surface processing is processing over substantially the whole length in the tooth direction D1, like processing toward the central part so that the central part has a filleted corner. In contrast, the shovel tooth processing is processing which avoids only two ends in the tooth direction D1. No matter it is the convex surface processing or the shovel tooth processing, both of them enable two ends in the tooth direction D1 to have a tooth thickness smaller than that of the central part, so that a position contacting with teeth of a mating gear may be close to the center in the tooth direction D1. Through such tooth direction trimming, it is possible to suppress "single-side contact" in which tooth contact is biased toward an end in the tooth direction D1 due to manufacturing errors or assembly errors of gears, especially stress concentration at the end (tooth width end) in the tooth direction D1 is alleviated, and tooth contact is improved. Details of the tooth direction trimming part 310 will be described in a "(4.6) Tooth direction trimming" section.

As shown in FIG. 8A where a part of the tooth root 312 of the external tooth 31 (region Z1 in FIG. 7) is enlarged, a smooth surface state where crystalline grains are not sheared is mainly formed in the tooth root 312, the middle part 314, or the like of the external tooth 31 where the rolling surface 300 is arranged. In contrast, as shown in FIG. 8B where a part of the tooth crest 313 of the external tooth 31 (region Z2 in FIG. 7) is enlarged, a surface state where crystalline grains are sheared is mainly formed in the tooth crest 313 where the rolling surface 300 is not arranged. As shown in FIG. 8A and 8B, in case that a unit length W1 (0.25 mm, as an example) in the tooth direction D1 and a unit length Y1 (1 µm, as an example) in a direction of longitudinal magnification are specified, the surface roughness of the tooth root 312 (the rolling surface 300) is smaller than that of the tooth crest 313.

Here, the surface roughness of the rolling surface 300 is preferably 1/64 times or more and 1/10 times or less of the surface roughness of the tooth crest 313. The surface roughness of the rolling surface 300 is not limited to 1/64 times or more of the surface roughness of the tooth crest 313, for example, it may be 1/80 times or more, 1/50 times or more, 1/30 times or more, or 1/16 times or more of the surface roughness of the tooth crest 313, etc. Similarly, the surface roughness of the rolling surface 300 is not limited to 1/10 times or less of the surface roughness of the tooth crest 313, for example, it may be 1/2 times or less, 1/5 times or less, 1/12 times or less, or 1/16 times or less of the surface roughness of the tooth crest 313, etc. In this way, the surface roughness of the rolling surface 300 (the tooth root 312 and the middle part 314) is a value sufficiently smaller than the surface roughness of the tooth crest 313, so that friction with the internal teeth 21 is easily reduced at the tooth root 312 and the middle part 314. As an example, the surface roughness of the rolling surface 300 is preferably not less than Ra0.01 and not more than Ra0.2, and in this case, it is preferably 1/10 times or less of the surface roughness (Ra) of the tooth crest 313.

That is, on surfaces of the external teeth 31 formed for example by performing processing of shearing crystalline grains of metallic structure like cutting, grinding or honing processing on the outer peripheral surface of the flexible external gear 3, scaly "burrs" (convex parts) are originally generated at a crystalline boundary. On the other hand, in the rolling surface 300 formed for example by performing processing of not shearing crystalline grains of metallic structure like rolling processing on the external teeth 31, such scaly "burrs" are not generated, instead, a smooth surface state is achieved.

Furthermore, surface hardness of the middle part 314 in the tooth height direction of the external tooth 31 is at least higher than that of the tooth crest 313. Specifically, for example, local heat treatment is performed on only the middle part 314 of the external tooth 31 by using a method which may perform local heat treatment such as laser quenching or the like, so that surface hardness of the external tooth 31 is locally increased. As an example, the surface hardness of the tooth crest 313 of the external tooth 31 is HRC40, and the surface hardness of the middle part 314 is about HRC60.

If the harmonic gear device 1 is used for a long period of time, for example, foreign matter such as metal powder or nitride, or the like caused by chip or abrasion, or the like may be generated due to contact of the internal teeth 21 and the external teeth 31. The surface hardness of the external teeth 31 is locally increased, so that it is not easy to damage toughness compared to a situation where the surface hardness of the whole flexible external gear 3 is increased, thereby maintaining tolerance on deformation of the flexible external gear 3. On this basis, with regard to the middle part 314 in the tooth height direction of the external teeth 31 of the flexible external gear 3 which may be actually in contact with the internal teeth 21, it is possible to suppress generation of foreign matter such as metal powder or nitride, or the like caused by chip or abrasion, or the like of the external teeth 31 generated based on contact thereof with the internal teeth 21, by increasing the surface hardness.

### (4.5) Surface hardness

Next, the surface hardness of the internal teeth 21 and the external teeth 31 will be described.

As described above,the surface hardness of the internal teeth 21 is lower than that of the external teeth 31. That is, hardness of surfaces of the external teeth 31 is higher (harder) than hardness of surfaces of the internal teeth 21. "hardness" stated in the application refers to a hard degree of an object, and hardness of a metal is indicated for example by size of an indentation formed by pushing and pressing a steel ball at a certain pressure. Specifically, as an example of hardness of the metal, there are Rockwell hardness (HRC), Brinell hardness (HB), Vickers hardness (HV), or Shore hardness (HS), etc. Hardness is indicated by Vickers hardness (HV), unless particularly denied otherwise. As a means of increasing (hardening) hardness of a metal component, there are for example alloying, or heat treatment, etc.

Surfaces of the external teeth 31 of the flexible external gear 3 is made of a material with high hardness and high toughness (strong and tough), and the internal teeth 21 of the rigid internal gear 2 are made of a material with a hardness lower than that of the external teeth 31. As an example, a material obtained by performing heat treatment (quenching and tempering) on nickel-chromium-molybdenum steel specified as "SNCM439" by Japanese Industrial Standards (JIS) is used for the external teeth 31. Spherical graphite cast iron specified as "FCD800-2" by JIS is used for the internal teeth 21.

Further, the surface hardness of the internal teeth 21 which have relatively low hardness compared to the external teeth 31, is preferably HV350 or less. As an example, the surface hardness of the internal teeth 21 is selected in a range of HV250 or more and HV350 or less. A lower limit of the surface hardness of the internal teeth 21 is not limited to HV250, and for example, it may be HV150, HV160, HV170, HV180, HV190, HV200, HV210, HV220, HV230, or HV240, etc. Similarly, an upper limit of the surface hardness of the internal teeth 21 is not limited to HV350, and for example, it may be HV360, HV370, HV380, HV390, HV400, HV410, HV420, HV430, HV440, or HV450, etc.

In contrast, the surface hardness of the external teeth 31 which have relatively high hardness compared to the internal teeth 21, is preferably HV380 or more. As an example, the surface hardness of the external teeth 31 is selected in a range of HV380 or more and HV450 or less. A lower limit of the surface hardness of the external teeth 31 is not limited to HV380, and for example, it may be HV280, HV290, HV300, HV310, HV320, HV330, HV340, HV350, HV360, or HV370, etc. Similarly, an upper limit of the surface hardness of the internal teeth 21 is not limited to HV450, and for example, it may be HV460, HV470, HV480, HV490, HV500, HV510, HV520, HV530, HV540, or HV550, etc.

Furthermore,a difference between the surface hardness of the internal teeth 21 and the surface hardness of the external teeth 31 is HV50 or more. That is, the surface hardness of the external teeth 31 is set to be more than the surface hardness of the internal teeth 21 by HV50 or more. In summary, for example, if the surface hardness of the internal teeth 21 is HV350, the surface hardness of the external teeth 31 is HV400 or more. Furthermore, if the surface hardness of the external teeth 31 is HV380, the surface hardness of the internal teeth 21 is HV330 or less. The difference between the surface hardness of the internal teeth 21 and the surface hardness of the external teeth 31 is not limited to HV50 or more, and for example, it may be HV20 or more, HV30 or more, or HV40 or more. Further, the difference between the surface hardness of the internal teeth 21 and the surface hardness of the external teeth 31 is preferably greater, for example, it is more preferably HV60 or more, HV70 or more, HV80 or more, HV90 or more, or HV100 or more. If the difference between the surface hardness of the internal teeth 21 and the surface hardness of the external teeth 31 is HV100 or more, then when the surface hardness of the internal teeth 21 is HV350, the surface hardness of the external teeth 31 is HV450 or more.

As described above,the surface hardness of the internal teeth 21 is set to be lower than the surface hardness of the external teeth 31. Therefore, when the internal teeth 21 are in contact with the external teeth 31 during operation of the harmonic gear device 1, the internal teeth 21 having relatively low surface hardness are abraded more actively than the external teeth 31. When two components (the internal teeth 21 and the external teeth 31) having different surface hardness are in contact with each other, abrasion of the relatively soft internal teeth 21 advances, thereby suppressing abrasion of the relatively hard external teeth 31. That is, in an initial stage of usage of the harmonic gear device 1, since tooth surfaces of the internal teeth 21 are moderately abraded, a real contact area between the internal teeth 21 and the external teeth 31 increases, and surface pressure decreases, it is difficult to generate abrasion of the external teeth 31. Furthermore, in case that the surface hardness of the internal teeth 21 is HV350 or less, even though foreign matter is generated due to chip or abrasion, or the like of the internal teeth 21 caused by contact of the internal teeth 21 and the external teeth 31, the foreign matter is relatively soft. In summary, the foreign matter caused by abrasion which is easily generated at the initial stage of usage of the harmonic gear device 1, is set as a soft foreign matter coming out of the relatively soft internal teeth 21, so that for example, even though the foreign matter enters the bearing 42, damage to the bearing 42 may be suppressed. As a result, for example, a generation amount of a hard foreign matter which greatly damages the bearing 42 or the like is suppressed. In particular, when the difference between the surface hardness of the internal teeth 21 and the surface hardness of the external teeth 31 is a relatively large value such as HV50 or more, the above effect is significant.

Further, spherical graphite cast iron is used as material of the internal teeth 21, so that an effect of suppressing ablation of tooth surfaces of the internal teeth 21 and the external teeth 31 may be expected at the time of initial abrasion of the internal teeth 21. Therefore, a lubrication effect at meshing portions of the internal teeth 21 and the external teeth 31 may be obtained, and power transmission efficiency of the wave gear device 1 may be improved.

The surface hardness of the internal teeth 21 and the external teeth 31 does not have to be specified by Vickers hardness (HV), and the surface hardness of the internal teeth 21 and the external teeth 31 may also be specified by other hardness such as Rockwell hardness (HRC), Brinell hardness (HB), or Shore hardness (HS).

Specifically, in case that the surface hardness is specified by the Rockwell hardness (HRC), the surface hardness of the internal teeth 21 is preferably HRC30 or less. As an example, the surface hardness of the internal teeth 21 is selected in a range of HRC20 to more and HRC30 or less. A lower limit of the surface hardness of the internal teeth 21 is not limited to HRC20, and for example, it may be HRC10, HRC15, or HRC25, etc. Similarly, an upper limit of the surface hardness of the internal teeth 21 is not limited to HRC30, and for example, it may be HRC35, HRC40, or HRC45, etc.

In contrast, the surface hardness of the external teeth 31 is preferably HRC40 or more. As an example, the surface hardness of the external teeth 31 is selected in a range of HRC40 or more and HRC60 or less. A lower limit of the surface hardness of the external teeth 31 is not limited to HRC40, and for example, it may be HRC30, or HRC35, etc. Similarly, an upper limit of the surface hardness of the external teeth 31 is not limited to HRC60, and for example, it may be HRC50, HRC55, HRC65, HRC70, or HRC75, etc.

Furthermore, due to fretting wear between the flexible external gear 3 and the wave generator 4 (the outer ring 421 of the bearing 42), foreign matter generated due to chip or abrasion, or the like is relatively hard. That is, the foreign matter generated by contact of the flexible external gear 3 with a relatively high surface hardness and the outer ring 421 of the bearing 42 is harder than the soft foreign matter coming out of the internal teeth 21 as described above. When the hard foreign matter coming out of the flexible external gear 3 or the outer ring 421 enters the bearing 42, indentation caused by the foreign matter biting between the outer ring 421 or the inner ring 422 and the rolling body 423 is taken as an origin, and surface of any one of the outer ring 421, the inner ring 422 and the rolling body 423 may be damaged. Such damage (a surface origin type of exfoliation) results in deterioration of quality, characteristics, or the like of the harmonic gear device 1, and consequently results in reduction of the reliability of the harmonic gear device 1.

However, as described above, in the harmonic gear device 1, the first region R1 with a small surface roughness is arranged at the back side of the external teeth 31 in the inner peripheral surface 301 of the flexible external gear 3, so that sufficient lubricant Lb1 is maintained at the contact portion of the flexible external gear 3 and the wave generator 4. Therefore, a surface of the contact portion of the flexible external gear 3 and (the outer ring 421 of) the bearing 42 is formed in a surface state where it is covered with the lubricant Lb1, and occurrence of fretting wear may be suppressed. Therefore, generation of foreign matter with sound quality coming out of the flexible external gear 3 or the outer ring 421 is originally suppressed. As a result, it becomes difficult to generate damage caused by the relatively hard foreign matter entering the bearing 42, and in particular, it is difficult to reduce reliability even when it is used for a long period of time, therefore transmission efficiency of the harmonic gear device 1 is improved, lifespan of the harmonic gear device 1 is extended, and performance of the harmonic gear device 1 is improved.

### (4.6) Tooth direction trimming

Next, tooth direction trimming of the internal teeth 21 and the external teeth 31 will be described.

As a premise, as shown in FIG. 1B, the internal teeth 21 each is provided with a tooth root 212 and a tooth crest 213. The internal teeth 21 are arranged on the inner peripheral surface of the rigid internal gear 2, therefore tooth roots 212 of the internal teeth 21 are equivalent to the inner peripheral surface of the rigid internal gear 2, and the tooth crest 213 protrudes toward interior (the center of the rigid internal gear 2) from the inner peripheral surface of the rigid internal gear 2.

On the other hand, as shown in FIG. 1B, the external teeth 31 each is provided with a tooth root 312 and a tooth crest 313. The external teeth 31 are arranged on the outer peripheral surface of (the trunk part 321 of) the flexible external gear 3, therefore tooth roots 312 of the external teeth 31 are equivalent to the outer peripheral surface of (the trunk part 321 of) the flexible external gear 3, and the tooth crest 313 protrudes toward exterior from the outer peripheral surface of (the trunk part 321 of) the flexible external gear 3.

At the meshing positions of the internal teeth 21 and the external teeth 31, the tooth crest 313 of the external tooth 31 is inserted between an adjacent pair of tooth crests 213 of the internal teeth 21, so that the internal teeth 21 are meshed with the external teeth 31. At this time, tooth crests 313 of the external teeth 31 are opposed to tooth roots 212 of the internal teeth 21, and tooth crests 213 of the internal teeth 21 are opposed to tooth roots 312 of the external teeth 31. Furthermore, an ideal situation is that a slight gap is ensured between the tooth root 212 of the internal tooth 21 and the tooth crest 313 of the external tooth 31, and between the tooth root 312 of the external tooth 31 and the tooth crest 213 of the internal tooth 21. In this state, opposing tooth surfaces of the internal tooth 21 and the external tooth 31 in a tooth thickness direction are in contact with each other, and power transmission between the rigid internal gear 2 and the flexible external gear 3 is performed.

Furthermore, chamfered parts 211 are arranged at two ends of the internal tooth 21 in the tooth direction D1. The chamfered part 211 is a C surface which reduces a protrusion amount of the internal tooth 21 toward two sides in the tooth direction D1, and is substantially a portion which does not contribute to meshing of the internal tooth 21 and the external tooth 31. That is, the chamfered part 211 of the internal tooth 21 is not in contact with the external tooth 31 at the meshing position of the internal tooth 21 and the external tooth 31. Similarly, chamfered parts 311 are arranged at two ends of the external tooth 31 in the tooth direction D1. The chamfered part 311 is a C surface which reduces a protrusion amount of the internal tooth 21 toward two sides in the tooth direction D1, and is substantially a portion which does not contribute to meshing of the internal tooth 21 and the external tooth 31. That is, the chamfered part 311 of the external tooth 31 is not in contact with the internal tooth 21 at the meshing position of the internal tooth 21 and the external tooth 31.

Here, the internal tooth 21 of the rigid internal gear 2 is provided with a tooth direction trimming part 210. That is, in the wave gear device 1, tooth direction trimming is performed at least on the internal tooth 21. The tooth direction trimming part 210 of the internal tooth 21 is arranged on an end of at least one side in the tooth direction D1. In other words, the internal tooth 21 is provided with a tooth direction trimming part 210 on an end of at least one side of the internal tooth 21 in the tooth direction D1. Tooth direction trimming parts 210 are arranged at two ends of the internal tooth 21 in the tooth direction D1.

Furthermore, the external tooth 31 of the flexible external gear 3 is also provided with a tooth direction trimming part 310. That is, in the harmonic gear device 1, tooth direction trimming is performed not only on the internal tooth 21, but also on the external tooth 31. The tooth direction trimming part 210 of the external tooth 31 is arranged on an end of at least one side in the tooth direction D1. In other words, the external tooth 31 is provided with a tooth direction trimming part 310 on an end of at least one side of the external tooth 31 in the tooth direction D1. Tooth direction trimming parts 310 are arranged at two ends of the external tooth 31 in the tooth direction D1.

In this way, in the wave gear device 1 , at least one of the internal teeth 21 or the external teeth 31 is provided with tooth direction trimming parts 210 and 310. The tooth direction trimming parts 210 and 310 make it difficult to generate stress concentration due to excessive tooth contact of the internal teeth 21 and the external teeth 31, and as a result, tooth contact of the internal teeth 21 and the external teeth 31 may be improved. Therefore, it is difficult to generate foreign matter caused by chip or abrasion, or the like due to contact of the internal teeth 21 and the external teeth 31, and it is possible to achieve the wave gear device 1 of which reliability is difficult to reduce.

### (5) Function

Next, the function of the wave gear device 1 will be described in more detail.

As described above, in the wave gear device 1, especially if it is used for a long period of time, fretting wear may occur to the contact portion of the flexible external gear 3 and the wave generator 4, along with rotation of the wave generator 4 embedded in an inner side of the flexible external gear 3. Furthermore, if fretting wear occurs, it results in surface roughness, occurrence of rust due to wear powder, and damage of (bearing 42 of) the wave generator 4 due to the wear powder entering an inner side of the wave generator 4, or the like, which may affect reliability of the harmonic gear device 1.

Reasons of generating such fretting wear are considered to be "lubricant depletion" in which the lubricant Lb1 is insufficient or exhausted at the contact portion of the flexible external gear 3 and the wave generator 4. That is, it is presumed that the contact portion of the flexible external gear 3 and the wave generator 4 is originally in an environment where it is easy to generate fretting wear due to micro-vibration between contact surfaces generated in a state where the lubricant Lb1 is insufficient. The following two reasons are specifically considered as reasons of forming the environment where it is easy to generate such fretting wear.

The first reason is that elastic deformation of the flexible external gear 3 is repeated frequently. That is, during one revolution of the cam 41 of the wave generator 4, elastic deformation of the flexible external gear 3 in a direction (such as an up-down direction of FIG. 2A) to form a major axis of an elliptical shape is repeated twice. Therefore, when the cam 41 rotates at a high speed, elastic deformation of the flexible external gear 3 is repeated at a high speed, and it is easy to generate vibration at the contact portion of the flexible external gear 3 and the wave generator 4, as the elastic deformation is repeated. As a result, micro-vibration occurs to the contact portion of the flexible external gear 3 and the wave generator 4 in a state where the lubricant Lb1 is insufficient.

More specifically, in a state where the flexible external gear 3 generates elastic deformation, an end of the flexible external gear 3 on the opened surface 35 side in the direction of the rotation axis Ax1 is deformed more than an end on the bottom part 322 side, to form a shape closer to an elliptical shape. Therefore, in the state where the flexible external gear 3 generates elastic deformation, as shown in FIG. 9, the inner peripheral surface 301 of the trunk part 321 of the flexible external gear 3 comprises a tapering surface 302 inclined at an inclination angle θ1 relative to the rotation axis Ax1. Furthermore, the inclination angle θ1 of the tapering surface 302 varies with elastic deformation of the flexible external gear 3. That is, when the flexible external gear 3 is viewed from the opened surface 35 side, the inclination angle θ1 of the tapering surface 302 is the largest at two ends in a direction of the major axis of the elliptical shape ("major axis side" in FIG. 9), and the inclination angle θ1 of the tapering surface 302 is the smallest at two ends in a direction of a minor axis of the elliptical shape ("minor axis side" in FIG. 9). Therefore, the inclination angle θ1 of the tapering surface 302 also varies at a high speed due to frequent and repeated elastic deformation of the flexible external gear 3, therefore the inner peripheral surface 301 (tapering surface 302) of the flexible external gear 3 vibrates by way of repeatedly impacting the outer peripheral surface 424 of the outer ring 421. As described above, micro-vibration accompanying impact is generated, and as a result, it is easy to generate fretting wear at the contact portion of the flexible external gear 3 and the wave generator 4.

The second reason is that relative rotation between the outer ring 421 and the flexible external gear 3 is at a low speed. That is, due to influence of the gap X1 between the outer ring 421 and the flexible external gear 3, along with elastic deformation of the outer ring 421 and the flexible external gear 3 as the cam 41 of the wave generator 4 rotates, relative rotation may be generated between the outer ring 421 and the flexible external gear 3. However, this relative rotation is for example a low-speed rotation at about a few thousandths or a few hundredths of the rotation speed of the cam 41. Therefore, in the gap X1 between the outer ring 421 and the flexible external gear 3, the lubricant Lb1 cannot be expected to flow based on this relative rotation, and it is in an environment where it is disadvantageous to form a film (oil film) of the lubricant Lb1 at the contact portion thereof. Nevertheless, since relative rotation may be generated between the outer ring 421 and the flexible external gear 3, the outer ring 421 and the flexible external gear 3 relatively rub against each other, to form an environment where it is easy to generate fretting wear.

In the harmonic gear device 1 , according to the above reasons, the lubricant Lb1 may be forcibly supplied to the contact portion between the outer ring 421 and the flexible external gear 3 in an environment where it is easy to generate fretting wear. That is, the harmonic gear device 1 may supply the lubricant Lb1 to the contact portion of the flexible external gear 3 and the wave generator 4 through the through hole H1, thereby maintaining sufficient lubricant Lb1 at the contact portion. In this way, occurrence of fretting wear is suppressed by preventing "lubricant depletion" in which the lubricant Lb1 is insufficient or exhausted at the contact portion of the outer ring 421 and the flexible external gear 3.

Furthermore, in the harmonic gear device 1 , the first region R1 located at the back side of the external teeth 31 in the inner peripheral surface 301 of the flexible external gear 3 is formed to have a surface roughness smaller than that of the second region R2 except the first region R1. Therefore, as in the first region R1, the inner peripheral surface 301 of the flexible external gear 3 is formed in a partially smooth surface state, so that it is easy for the lubricant Lb1 to stay at the contact portion of the flexible external gear 3 and the wave generator 4, and sufficient lubricant Lb1 may be maintained at the contact portion. Therefore, it is possible to further prevent "lubricant depletion" in which the lubricant Lb1 is insufficient or exhausted at the contact portion of the outer ring 421 and the flexible external gear 3, and suppress occurrence of fretting wear.

As a result, the surface of the contact portion of the outer ring 421 and the flexible external gear 3 is formed in a surface state where it is covered with the lubricant Lb1, and occurrence of fretting wear is suppressed. Therefore, in the harmonic gear device 1 , it is possible to provide a harmonic gear device 1 where it is difficult to generate bad conditions caused by fretting wear between the outer ring 421 and the flexible external gear 3, and it is difficult to reduce reliability. Furthermore, the harmonic gear device 1 is difficult to reduce reliability even when it is used for a long period of time, therefore transmission efficiency of the harmonic gear device 1 is improved, lifespan of the harmonic gear device 1 is extended, and performance of the harmonic gear device 1 is improved.

That is, since the harmonic gear device 1 supplies the lubricant Lb1 to the contact portion of the outer ring 421 and the flexible external gear 3, it is difficult to prevent deformation followability of the flexible external gear 3, and it brings about improvement of power transmission efficiency, lifespan extension due to reduction of load applied to the bearing 42, etc. Furthermore, it is also possible to prevent a situation where wear powder generated by fretting wear enters the bearing 42 or the like, therefore occurrence of damage originating from indentation (a surface origin type of exfoliation) due to bite of wear powder may also be reduced. Therefore, lifespan extension and performance improvement may be expected for the harmonic gear device 1.

In particular, in case that it is focused on a part in the circumferential direction of the outer ring 421, in a structure where the lubricant reservoir exists only at the lower part of the outer contour of the actuator 100 (referring to FIG. 4), if there is no through hole H1, the lubricant Lb1 may permeate in the gap X1 only when it passes through the lubricant reservoir at the focused part. Furthermore, since rotation of the outer ring 421 is at a lower speed than that of the inner ring 422, a frequency with which the lubricant Lb1 may permeate in the gap X1 is low. In contrast, in the wave gear device 1 , since the through hole H1 is provided, when it passes through the lubricant reservoir at the focused part of the outer ring 421, the lubricant Lb1 is supplemented only between the outer ring 421 and the inner ring 422, and the lubricant Lb1 may also be supplied to the gap X1. That is, since the lubricant Lb1 supplemented between the outer ring 421 and the inner ring 422 is supplied to the gap X1 through the through hole H1, it is difficult to generate "lubricant depletion" at the contact portion of the flexible external gear 3, on the whole circumference of the outer ring 421.

Furthermore, when the bearing 42 operates to rotate multiple rolling bodies 423, the rolling bodies 423 function as a pump, so that the lubricant Lb1 may be forcibly sent into the gap X1 through the through hole H1. Further, the surface roughness of the first region R1 located at the back side of the external teeth 31 in the inner peripheral surface 301 of the flexible external gear 3 is formed to be small. According to these structures, it is easy for the lubricant Lb1 supplied to the gap X1 through the through hole H1 to stay in the inner peripheral surface 301 of the flexible external gear 3, therefore depletion of the lubricant in the gap X1 may be efficiently eliminated. Further, elastic deformation of the flexible external gear 3 is repeated, and the inclination angle θ1 of the tapering surface 302 varies at a high speed, which also contribute to diffusion of the lubricant Lb1 in the gap X1. Furthermore, not only suppression of lubricant depletion may be achieved, but also for example improvement of startability of the harmonic gear device 1 in a low-temperature environment where it is easy for the lubricant Lb1 to solidify, may be achieved.

### (6) Application example

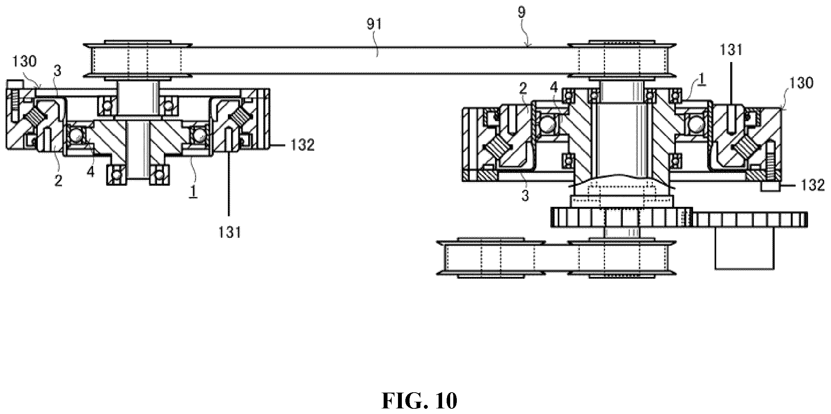

Next, an application example of the harmonic gear device 1, the actuator 100, and the joint device for a robot 130 will be described with reference to FIG. 10.

FIG. 10 is a cross-sectional view showing an example of a robot 9 using the harmonic gear device 1. The robot 9 is a horizontal multi-joint robot, i.e., a so-called Selective Compliance Assembly Robot Arm (SCARA) type robot.

As shown in FIG. 10, the robot 9 comprises two joint devices for a robot 130 (comprising the harmonic gear device 1) and a link 91. The two joint devices for a robot 130 are arranged at joints at two positions of the robot 9 respectively. The link 91 connects the two joint devices for a robot 130 at the two positions. In the example of FIG. 10, the harmonic gear device 1 is not a cup shape, instead, is formed of a top hat-shaped wave deceleration device. That is, in the harmonic gear device 1 exemplified in FIG. 10, the flexible external gear 3 formed in a top hat shape is used.

### (7) Manufacturing method

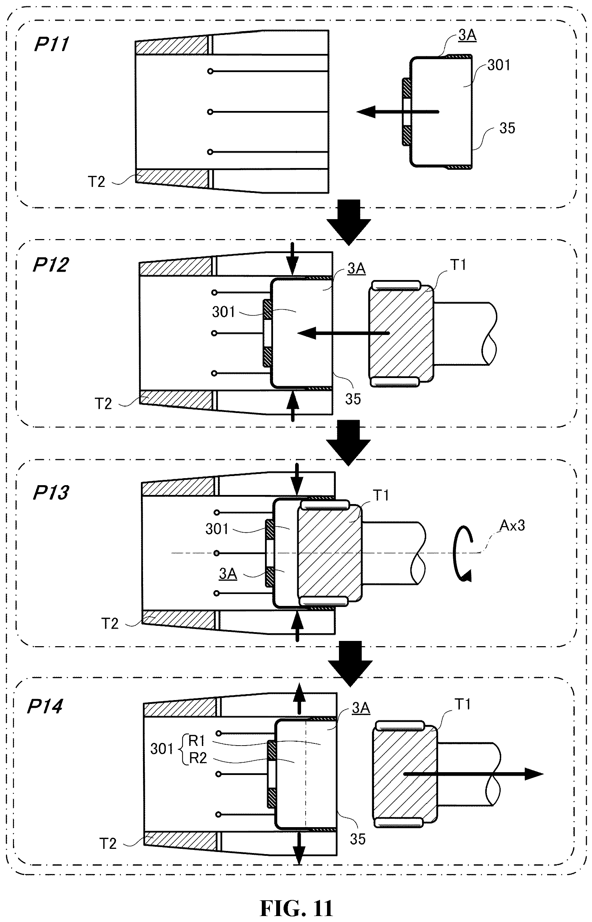

Next, a method for manufacturing the harmonic gear device 1 will be described with reference to FIG. 11 to FIG. 16B.

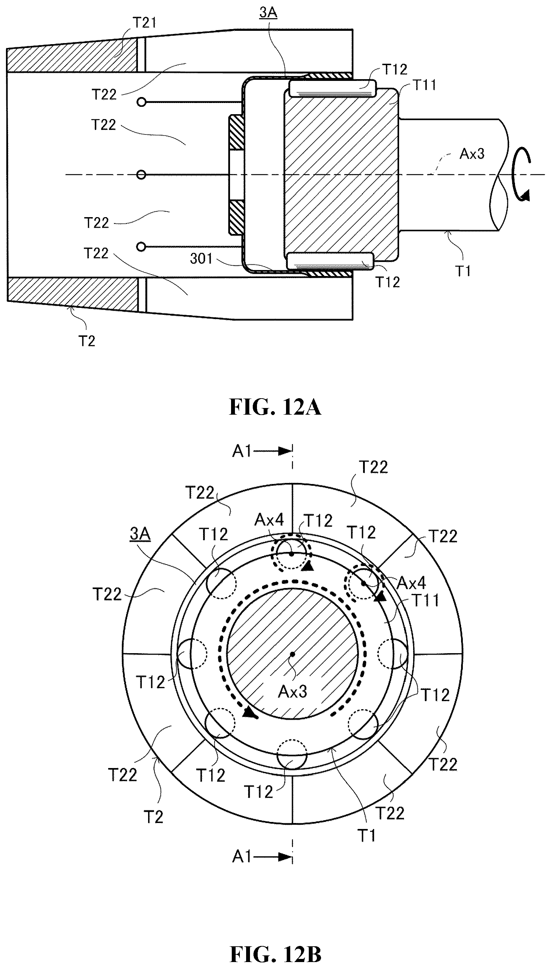

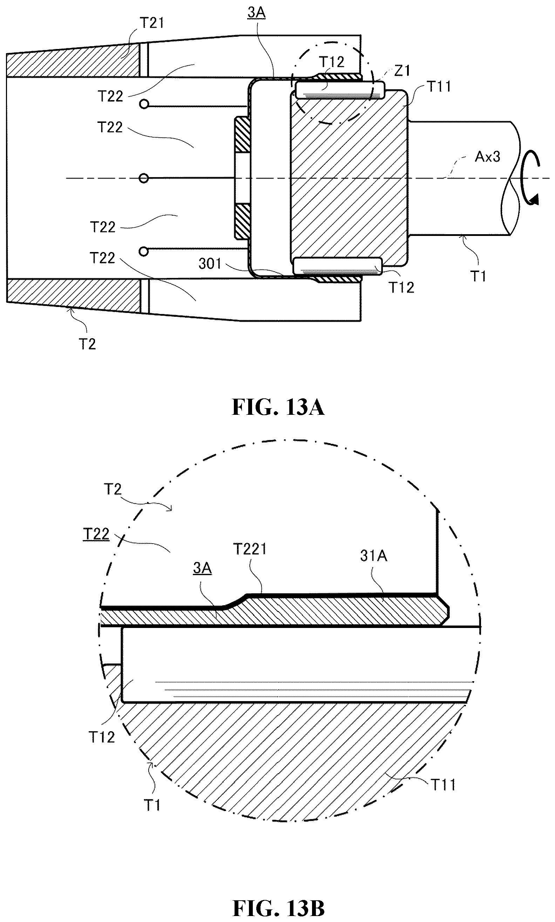

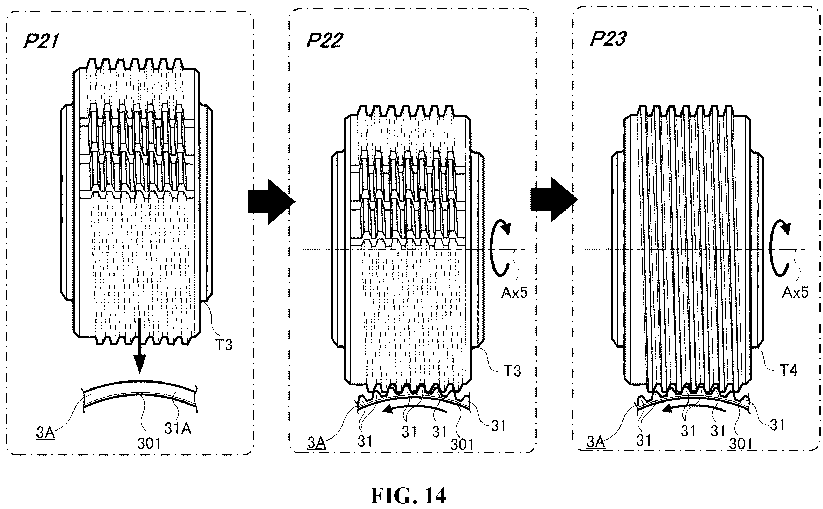

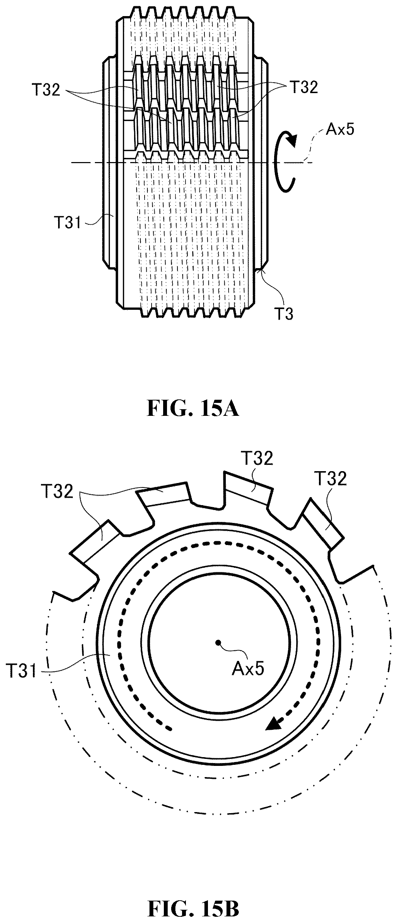

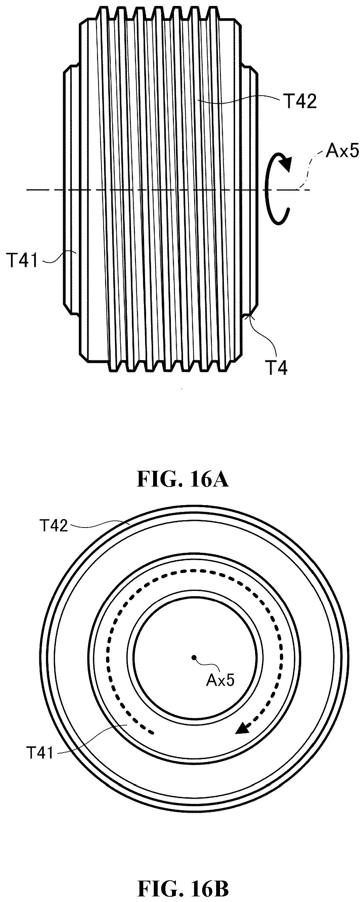

FIG. 11 is a diagrammatic explanatory view showing processes of processing the inner peripheral surface 301 of the flexible external gear 3. FIG. 12A is a diagrammatic cross-sectional view showing a rolling roller T1 and a chuck member T2 used for processing the inner peripheral surface 301 of the flexible external gear 3, and FIG. 12B is a diagrammatic side view thereof. FIG. 13A is a diagrammatic cross-sectional view showing a chuck member T2, and FIG. 13B is a diagrammatic enlarged view of a region Z1 of FIG. 13A. FIG. 14 is a diagrammatic explanatory view showing processes of processing external teeth 31 of the flexible external gear 3. FIG. 15A is a diagrammatic front view showing a hob T3 used for processing external teeth 31, and FIG. 15B is a diagrammatic side view thereof. FIG. 16A is a diagrammatic front view showing a tool T4 used for processing the rolling surface 300 of the external tooth 31, and FIG. 16B is a diagrammatic side view thereof.

### (7.1) Processing of the inner peripheral surface of the flexible external gear

First, a method for processing the inner peripheral surface 301 of the flexible external gear 3, in the method for manufacturing the harmonic gear device 1 will be described.

As shown in FIG. 11, the method for manufacturing the harmonic gear device 1 comprises a preparation process (process P11) and a plastic deformation processing process (process P13). The preparation process is a process of preparing a base material 3A forming a base of the flexible external gear 3. The plastic deformation processing process is a process of forming the first region R1 on the inner peripheral surface 301 of the base material 3A by plastic deformation processing. That is, in this manufacturing method, an operator first prepares a cylindrical base material 3A with the inner peripheral surface 301 in the preparation process. The inner peripheral surface 301 of the base material 3A is formed for example by cutting, grinding, or honing processing of a metal member. That is, the inner peripheral surface 301 of the base material 3A prepared in the preparation process is in a surface state where metal crystalline grains are sheared over the whole region of the inner peripheral surface 301, like the second region R2.

Then, in the plastic deformation processing process, the operator performs plastic deformation processing on a part of the inner peripheral surface 301 of the base material 3A, so that the flexible external gear 3 comprising the first region R1 (rolling surface) and the second region R2 (cutting surface) in the inner peripheral surface 301 is formed. As an example, the plastic deformation processing performed in the plastic deformation processing process is tumbling processing using the rolling roller T1. The tumbling processing is a type of rolling processing, in which a metal surface is flattened by a roller T12 (referring to FIG. 12A) of the rolling roller T1 to form a smooth surface state. That is, in the plastic deformation processing process, in a state where the roller T12 made of high hardness metal is pressed against the inner peripheral surface 301 of the base material 3A, the roller T12 moves in the circumferential direction of the inner peripheral surface 301 by way of rolling on the inner peripheral surface 301, so that the inner peripheral surface 301 is plastically deformed to form the first region R1.

More specifically, the rolling roller T1 as shown in FIG. 12A and FIG. 12B is used in the plastic deformation processing process. FIG. 12A is equivalent to a cross section along a line A1-A1 of FIG. 12B. The rolling roller T1 is provided with a main shaft part T11 configured to be rotatable (self-rotate) with a central axis Ax3 as a center, and multiple rollers T12 held on an outer peripheral portion of the main shaft part T11. Multiple (here, eight as an example) rollers T12 are arranged at equal intervals in a circumferential direction of the main shaft part T11. Each roller T12 is formed in a cylindrical shape, and is held by the main shaft part T11 in a state where it is rotatable (self-rotate) with a central axis Ax4 parallel to the central axis Ax3 as a center. In a state where such rolling roller T1 is inserted into the base material 3A, the main shaft part T11 is rotatably driven with the central axis Ax3 as a center (a counterclockwise direction, in the example of FIG. 12B), so that multiple rollers T12 rotate with the central axis Ax4 as a center (a clockwise direction, in the example of FIG. 12B) respectively. At this time, multiple rolls T12 in contact with the inner peripheral surface 301 of the base material 3A perform rolling while move by way of rolling on the inner peripheral surface 301 (process P13 of FIG. 11). According to such plastic deformation processing process, not only the first region R1 in a smooth surface state may be formed, but also surface modification such as improvement of wear resistance, improvement of fatigue strength, or the like may be expected.

Furthermore, there is also a clamping process (process P12) of clamping the base material 3A from the outer peripheral surface side by using the chuck member T2 in at least the plastic deformation processing process. Therefore, in a state where the roller T12 is pressed against the inner peripheral surface 301 of the base material 3A, deformation of the base material 3A itself extending to the outer peripheral side may be suppressed, so that the inner peripheral surface 301 may be rolled efficiently.

As shown in FIG. 12A and 12B, the chuck member T2 is formed in a cylindrical shape which is opened on two sides in a direction parallel to the central axis Ax3, as a whole. The chuck member T2 is provided with a body part T21 integrally formed continuously in the circumferential direction, and multiple individual pieces T22 divided into multiple pieces in the circumferential direction. Multiple individual pieces T22 are connected to an end edge (right end edge in FIG. 12A) at a side of the body part T21 in the axial direction. Multiple individual pieces T22 are bent toward the central axis Ax3 side with a connection portion with the body part T21 as a fulcrum, so that an inner diameter of a portion surrounded by multiple individual pieces T22 is reduced. Therefore, as shown in FIG. 11, the base material 3A is inserted from the multiple individual pieces T22 side in the chuck member T2 (process P11), and thereafter, the chuck member T2 clamps the base material 3A from the outer peripheral side, by fastening multiple individual pieces T22 from exterior.

Then, in a state where the cylindrical base material 3A is clamped (held) by the chuck member T2 from the outer peripheral surface side, the rolling roller T1 is inserted into the base material 3A, and the rolling roller T1 is rotated with the axis Ax3 as a center (process P13). After the first region R1 is formed by plastic deformation processing (tumbling processing), the rolling roller T1 is pulled out of the base material 3A, and fastening of multiple individual pieces T22 is removed, so that clamping of the base material 3A by the chuck member T2 is removed (process P14). In this state, the base material 3A may be taken out of the chuck member T2.

Furthermore, the external teeth 31 on the outer peripheral surface of the flexible external gear 3 are not formed in the plastic deformation processing process. That is, the base material 3A shown in FIG. 11 is in a state where the external teeth 31 are not formed. Details of processes for forming the external teeth 31 will be described in a "(7.2) Processing of external teeth" section. That is, the method for manufacturing the harmonic gear device 1 further comprises a process of forming the external teeth 31 on an outer peripheral surface of the base material 3A after the plastic deformation processing process. Therefore, in the plastic deformation processing process of forming the first region R1 at a position on the back side of the external teeth 31, occurrence of bad conditions such as deformation of the external teeth 31 or the like may be avoided.

After the external teeth 31 are formed, there are situations of performing surface treatments such as shot peening or chemical conversion film formation on the base material 3A, etc. In shot peening processes, fatigue strength of the flexible external gear 3 may be improved by projecting small spherical projection material to modify and harden the surface. It is preferable to perform curing (masking) on the inner peripheral surface (particularly, the first region R1) of the base material 3A after subjecting to the rolling processing when these shot peening processes, surface treatments, or the like are performed. Therefore, an inner peripheral surface of the base material 3A after subjecting to the rolling processing is not easy to be affected by shot peening processes, surface treatments, etc.

Furthermore, the plastic deformation processing is performed by rotatably driving (the main shaft part T11 of) the rolling roller T1, however, it is not limited thereto, as long as relative rotation is generated between the main shaft part T11 of the rolling roller T1 and the base material 3A. For example, the plastic deformation processing may also be performed by rotatably driving the chuck member T2 to relatively rotate the base material 3A relative to the main shaft part T11 of the rolling roller T1, in a state where the main shaft part T11 of the rolling roller T1 is fixed.

Furthermore, as shown in FIG. 13A and FIG. 13B, the chuck member T2 may also be provided with an inner peripheral surface T221 of which a shape corresponds to the outer peripheral surface of the base material 3A. The inner peripheral surface T221 of multiple individual pieces T22 of the chuck member T2 shown in FIG. 13A and FIG. 13B is formed in a shape following a shape of the outer peripheral surface of the base material 3A before tooth cutting, that is, before the external teeth 31 are formed. Specifically, as shown in FIG. 13B, an expansion part 31A is arranged on the outer peripheral surface of the base material 3A before tooth cutting and on the opened surface 35 side. The expansion part 31A is arranged over the whole region in a circumferential direction of the base material 3A, and is formed with a wall thicker than other portions. Furthermore, the inner peripheral surface T221 of multiple individual pieces T22 is provided with a recess of which a shape corresponds to the expansion part 31A, and the expansion part 31A is embedded into the recess in a state where the base material 3A is clamped by the chuck member T2.

That is, in the example of FIG. 13A and FIG. 13B, the chuck member T2 is provided with an inner peripheral surface T221 of which a shape corresponds to the outer peripheral surface of the base material 3A, and is configured to be divided into multiple individual pieces T22 in the circumferential direction. According to this structure, in the plastic deformation processing process, the rolling force from the rolling roller T1 may be borne by the chuck member T2 over the while region of the outer peripheral surface of the base material 3A. Therefore, for example, compressive residual stress due to rolling is also applied to a boundary portion between the trunk part 321 of the flexible external gear 3 and the external teeth 31. That is, besides the external teeth 31 of the flexible external gear 3, the inner peripheral surface 301 is also formed of a rolling processed surface for the trunk part 321, so that a structure where compressive residual stress due to rolling processing is also applied to at least the boundary portion between the trunk part 321 and the external teeth 31, may be achieved. Therefore, the flexible external gear 3 is made with a thin wall, toughness thereof is improved (allowable stress is increased) under the action of compressive residual stress, and resistance to deformation of the flexible external gear 3 may be maintained.

### (7.2) Processing of external teeth

Next, a method for processing the external teeth 31 of the flexible external gear 3, in the method for manufacturing the harmonic gear device 1 will be described.

As shown in FIG. 14, the method for manufacturing the harmonic gear device 1 comprises a process P21, a process P22 and a process P23. The process P21 is a process of preparing a (second) base material 3A forming a base of the flexible external gear 3. The process P22 is a process of forming the external teeth 31 on the (second) base material 3A. The process P23 is a process of forming the rolling surface 300 on the external teeth 31 by plastic deformation processing. That is, in this manufacturing method, an operator first prepares the base material 3A provided with the expansion part 31A in the process P21. The (second) base material 3A prepared in the process P21 is in a state where plastic deformation processing (rolling processing) is performed on the inner peripheral surface 301 in the above plastic deformation processing process to form the first region R1. Then, in the process P22, the external teeth 31 are formed on the expansion part 31A by for example cutting, grinding, or honing processing. That is, the external teeth 31 of the base material 3A before the rolling surface 300 is formed in the process P23, is in a surface state where metal crystalline grains are sheared over the whole region of the external teeth 31, like the second region R2.

Furthermore, since the (first) rolling surface 300 is formed on the external teeth 31, the manufacturing method comprises the above processes P21 to P22 (referring to FIG. 14). However, in case that the (second) rolling surface 200 is formed on the internal teeth 21, the processes P21 to P23 are replaced as follows. That is, the process P21 is a process of preparing a first base material forming a base of the rigid internal gear 2. The process P22 is a process of forming the internal teeth 21 from the first base material. The process P23 is a process of forming the rolling surface 200 on the internal teeth by plastic deformation processing.

Here, at least one of the process of forming the internal teeth 21 from the first base material or the process P22 of forming the external teeth 31 from the (second) base material 3A comprises cutting processing. Specifically, the internal teeth 21 and the external teeth 31 are formed by tooth cutting processing (hob processing) where a hob head of the hob T3 is rotatably driven. That is, in the process P22 of forming the external teeth 31 on the base material 3A, as shown in FIG. 14, the operator cuts the expansion part 31A to form the external teeth 31, by the hob head rotatably driving the hob T3 pressed against the expansion part 31A of the base material 3A with an central axis Ax5 as a center. At this time, as the hob T3 rotates, the base material 3A also rotates with the rotation axis Ax1 as a center, so that the external teeth 31 are formed over the whole circumference of the outer peripheral surface of the base material 3A.

More specifically, in the process P22, the hob T3 is used as shown in FIG. 15A and FIG. 15B. The hob T3 is provided with a cylindrical part T31 configured to be rotatable (self-rotate) with the central axis Ax5 as a center, and multiple blades T32 protruded from an outer peripheral surface of the cylindrical part T31. Multiple blades T32 are configured to be arranged in a row by way of forming a helical shape with the central axis Ax5 as a center. In FIG. 14, FIG. 15A and FIG. 15B, a profile of a row (blade row) composed of multiple blades T32 is shown by a phantom line (double dash-dotted line), and illustration of a part of the blades T32 is omitted. In a state where such multiple blades T32 of the hob T3 are pressed against the expansion part 31A of the base material 3A, the base material 3A is rotated with the rotation axis Ax1 as a center, while the cylindrical part T31 is rotatably driven by the hob head with the central axis Ax5 as a center (clockwise in the example of FIG. 15B). At this time, the expansion part 31A of the base material 3A is cut by the blades T32 of the hob T3, and the external teeth 31 are formed at the same interval as that of multiple blades T32 in a direction parallel to the central axis Ax5 (the process P22 in FIG. 14).

Furthermore, the external teeth 31 are formed according to tooth cutting based on such cutting processing (hob processing), however, the surface of the external teeth 31 is the same as the second region R2, and the whole region thereof is a surface state where metal crystalline grains are sheared. That is, scaly scratches corresponding to a feeding rate of the hob T3 or the like are generated on the surface of the external teeth 31. In the process P23 after the process P22, the rolling surface 300 is formed on the external teeth 31 by plastic deformation processing, so that such concave-convex surface of the external teeth 31 generated as scratches is flattened, thereby achieving a smooth surface state.

Specifically, in the process P23, the plastic deformation processing uses a tool T4 as shown in FIG. 16A and FIG. 16B, and the tool T4 is provided with ribs T42 at the same interval as that of the hob T3 used in cutting processing. The tool T4 is provided with a cylindrical part T41 configured to be rotatable (self-rotate) with the central axis Ax5 as a center, and ribs T42 protruded from an outer peripheral surface of the cylindrical part T41. The ribs T42 are formed into a helical shape with the central axis Ax5 as a center. Here, the cylindrical part T41 has the same shape as the cylindrical part T31 of the hob T3, and the rib T42 has the same shape as the profile of the row (blade row) composed of multiple blades T32 of the hob T3. That is, the tool T4 is equivalent to a shape in which the blades T32 of the hob T3 are removed, and may be mounted to the hob head instead of the hob T3.

In a state where such ribs T42 of the tool T4 are pressed against the external teeth 31 of the base material 3A, the base material 3A is rotated with the rotation axis Ax1 as a center, while the cylindrical part T41 is rotatably driven by the hob head with the central axis Ax5 as a center (clockwise in the example of FIG. 16B). At this time, the surface of the external teeth 31 is plastically deformed in a state where the ribs T42 of the tool T4 are in pressure contact with the external teeth 31, to form the rolling surface 300 (process P23 of FIG. 14). Therefore, a crystalline boundary generated by shearing of crystalline grains, together with the scratches generated during tooth cutting are flattened, and thus the rolling surface 300 in a smooth surface state is achieved. As a result, the operator may easily form the rolling surface 300 on the external teeth 31 by using the tool T4 instead of the hob T3 and performing only the same operation of the hob head as in the hob processing.

Furthermore, since the tool T4 forms the rolling surface 300 on the external teeth 31 by performing the same operation as the hob T3, processing such as convex surface processing or shovel tooth processing (end undulation), or the like may be performed by rolling. Therefore, the rolling surface 300 comprising the tooth direction trimming part 310 may be easily achieved.

### (7.3) Others

When the harmonic gear device 1 is manufactured, especially when the outer ring 421 is manufactured, it is preferable to take measures to avoid reduction of strength due to arrangement of the through hole H1.

As an example, after a hole drilling process of forming the through hole H1, a surface processing process of surface processing the outer ring 421 (in particular, the inner peripheral surface 425 used as the rolling surface) is performed. That is, in order to prevent the through hole H1 from becoming an origin of cracks of the outer ring 421, it is preferable to leave compressive residual stress around the through hole H1 in the outer ring 421. Therefore, it is preferable to form the through hole H1 before surface processing processes such as quenching or the like are performed on the outer ring 421, and leave compressive residual stress generated based on heat treatment. Alternatively, fatigue strength of the outer ring 421 may be improved by shot peening processes of projecting small spherical projection material around the through hole H1 of the outer ring 421 to modify and harden the surface after heat treatment, etc.

The through hole H1 may also be located at a position deviated from the center of multiple rolling bodies 423 in the direction (tooth direction D1) parallel to the rotation axis Ax1. As an example, the through hole H1 is arranged at a position deviated from the center of the rolling bodies 423 toward the opened surface 35 side, that is, arranged at a position between the center of the rolling bodies 423 and the opened surface 35 in the tooth direction D1. According to this structure, there are advantages as follows: even though a large load is applied in the radial direction from the rolling bodies 423 to the member (here, the outer ring 421) formed with the through hole H1, it is difficult for the load to act around the through hole H1, and it is difficult to generate cracks originating from the through hole H1, etc.

Furthermore, the through hole H1 may also be arranged in multiple locations in the direction (tooth direction D1) parallel to the rotation axis Ax1. Furthermore, in the radial direction, an opened area of the through hole H1 on the gap X1 side may be smaller than an opened area on a side opposite to the gap X1. That is, in the (first) through hole H1 arranged in the outer ring 421, an opened area of the through hole H1 on the outer peripheral surface 424 side forming the gap X1 side is greater than an opened area of the through hole H1 on the inner peripheral surface 425 side forming the side opposite to the gap X1. Therefore, pressure of the lubricant Lb1 supplied to the gap X1 through the through hole H1 may be increased.

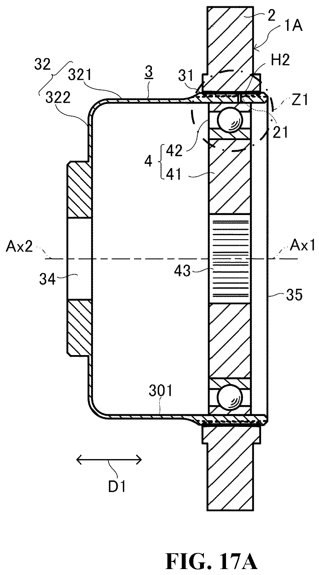

FIG. 17A and FIG. 17B are cross-sectional views equivalent to FIG. 1A and FIG. 1B. In the harmonic gear device 1A shown in FIG. 17A and FIG. 17B, a (second) through hole H2 is arranged in the external teeth 31 of the flexible external gear 3. In other words, in this example, the through hole H2 comprises "second through hole" arranged in the external teeth 31 of the flexible external gear 3. The through hole H2 arranged in the external teeth 31 of the flexible external gear 3, that is, the through hole H2 arranged at a position corresponding to the bearing 42 in the direction of the rotation axis Ax1, penetrates the flexible external gear 3 in the radial direction. Therefore, an opened surface at a side of the through hole H2 faces the gap X1 between the outer ring 421 and the flexible external gear 3, and an opened surface at another side of the through hole H2 is opened in the outer peripheral surface of the external teeth 31 of the flexible external gear 3 used as a meshing surface with the internal teeth 21. Therefore, an end of the through hole H2 is connected to the gap X1 between the outer ring 421 and the flexible external gear 3, and another end thereof is connected to a space between the external teeth 31 and the internal teeth 21. Therefore, the space between the external teeth 31 and the internal teeth 21 is communicated with the gap X1 between the outer ring 421 and the flexible external gear 3 through the through hole H2. Therefore, the lubricant Lb1 in the space between the external teeth 31 and the internal teeth 21 may be supplied to the gap X1 between the outer ring 421 and the flexible external gear 3 through the through hole H2.

When the flexible external gear 3 relatively rotates relative to the rigid internal gear 2, a part of the external teeth 31 are meshed with the internal teeth 21, therefore the external teeth 31 and the internal teeth 21 function as a pump. That is, the external teeth 31 and the internal teeth 21 constitute a pump. In this example, the external teeth 31 are meshed with the internal teeth 21, so that pressure in the space between the external teeth 31 and the internal teeth 21 is increased, therefore the lubricant Lb1 between the external teeth 31 and the internal teeth 21 is extruded to the gap X1 side through the through hole H2. In this way, the external teeth 31 and the internal teeth 21 constitute a positive displacement pump such as a vane pump, to extrude the lubricant Lb1 to the gap X1 side with a sufficient pressure, so that it is easy to supply sufficient lubricant Lb1 into the gap X1.

Here, as shown in FIG. 17B, the (second) through hole H2 is located between the center of the external teeth 31 and an end thereof on the opened surface 35 side in the direction (tooth direction D1) parallel to the rotation axis Ax1. Furthermore, the (second) through hole H2 is arranged on the tooth crest 313 from the tooth root 312 and the tooth crest 313 of the external teeth 31. Therefore, compared to a situation where the through hole H2 is formed in the tooth root 312, it is difficult to generate cracks originating from the through hole H2 or the like, by forming the through hole H2 in the tooth crest 313.

Furthermore, through holes H1 and H2 may be arranged in both the outer ring 421 and the external teeth 31 of the flexible external gear 3. In this case, the lubricant Lb1 in the space between the outer ring 421 and the inner ring 422 of the bearing 42 may be supplied to the gap X1 between the outer ring 421 and the flexible external gear 3 through the through hole H1. Furthermore, the lubricant Lb1 in the space between the external teeth 31 and the internal teeth 21 may be supplied to the gap X1 between the outer ring 421 and the flexible external gear 3 through the through hole H2. Therefore, the lubricant Lb1 may be supplied to the gap X1 from two sides (inner side and outer side) in the radial direction. Here, it is preferable that positions of the internal teeth 21 in the tooth direction D1 are different between the (first) through hole H1 and the (second) through hole H2.

Furthermore, performing tooth direction trimming on the internal teeth 21 and the external teeth 31, is not an essential structure of the harmonic gear device 1. For example, tooth direction trimming may not be performed on at least one of the internal teeth 21 or the external teeth 31.

Furthermore, ensuring a distance equal to or greater than a specified value in the radial direction between a track of multiple rolling bodies 423 and the opened surface of the (first) through hole H1 arranged in the outer ring 421, is not an essential structure of the harmonic gear device 1. That is, in a state where the rolling body 423 is present at a position corresponding to the through hole H1, the rolling body 423 may close the through hole H1 without generating a gap between the opened surface of the through hole H1 and the rolling body 423.

Furthermore, in the bearing 42, supporting each rolling body 423 at four points, is not an essential structure of the harmonic gear device 1. For example, there may be a structure where each rolling body 423 is supported at two points.

Furthermore, the harmonic gear device 1 is not limited to the cup shape described And for example, it may be a top hat shape, a circular shape, a differential shape, a flat shape (pancake shape), or a shield shape, etc. For example, even though it is a top hat-shaped harmonic gear device 1 as shown in FIG. 10, it is provided with a cylindrical flexible external gear 3 with an opened surface 35 at a side in the tooth direction D1, like the cup-shaped one. That is, the top hat-shaped flexible external gear 3 is provided with a flange part at an end on a side of the rotation axis Ax1, and an opened surface 35 at an end on a side opposite to the flange part. Even though it is a top hat-shaped flexible external gear 3, it is provided with external teeth 31 at an end on the opened surface 35 side, and the wave generator 4 is embedded therein.

Furthermore, structures of the actuator 100 are not limited to the structures described And may be appropriately changed. For example, the connection structure between the input part 103 and the cam 41 is not limited to a spline connection structure, and it may use a cross-shaped coupling, etc. The cross-shaped coupling is used as the connection structure between the input part 103 and the cam 41, so that eccentricity between the rotation axis Ax1 at the input side and the wave generator 4 (cam 41) may be canceled out, and eccentricity of the rigid internal gear 2 from the flexible external gear 3 may be further canceled out. Furthermore, the cam 41 may not be able to move along the rotation axis Ax1 relative to the input part 103.

Furthermore, application examples of the harmonic gear device 1, the actuator 100 and the joint device for a robot 130 are not limited to the above horizontal multi-joint robot, for example, may also be applicable to industrial robots other than the horizontal multi-joint robot, or robots other than industrial robots, etc. As an example, in industrial robots other than the horizontal multi-joint robot, there is a vertical multi-joint robot, or a parallel link-type robot, etc. As an example, in robots other than industrial robots, there is a home robot, a nursing robot, or a medical robot, etc.

Furthermore, the bearing 42 is not limited to a deep groove ball bearing, and for example, it may be an angular contact ball bearing, etc. Further, the bearing 42 is not limited to a ball bearing, and for example, it may be a roller bearing comprising rolling bodies 423 which are not ball-shaped "rollers", such as a cylindrical roller bearing, a needle roller bearing, or a tapered roller bearing, etc. Even though it comprises such rolling bodies 423 except the ball shape (spherical shape), a pressure difference is generated by rotation of the rolling bodies 423, and the rolling bodies 423 function as a pump structure.

Furthermore, material of each structural element of the harmonic gear device 1, the actuator 100 or the joint device for a robot 130 is not limited to metal, and for example, it may be a resin such as engineering plastic, etc.

Furthermore, the lubricant Lb1 is not limited to a liquid substance such as lubrication oil (oil liquid) or the like, instead, it may be a gel-like substance such as lubrication grease, etc.

Furthermore, the number and arrangement of through holes H1 are not limited to the number and arrangement. For example, one, two, or four or more through holes H1 may be provided. Further, in case that multiple through holes H1 are provided, an interval P1 of multiple through holes H1 may also be a multiple of an interval P2 of multiple rolling bodies 423, and it is not essential for multiple through holes H1 to be arranged at equal intervals.

Furthermore, the rolling roller T1 and the chuck member T2 used for processing the inner peripheral surface 301 of the flexible external gear 3 are not limited to the above structures, and may be appropriately changed. Similarly, the hob T3 and the tool T4 used for processing the external teeth 31 are not limited to the above structures, and may be appropriately changed. As an example, the hob T3 may be integrated with the tool T4 by way of switching the row (blade row) composed of multiple blades T32 of the hob T3 from its midway to the ribs T42 of the tool T4.

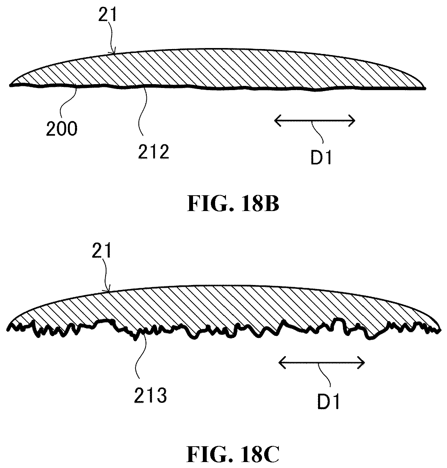

As shown in FIG. 18A, FIG. 18B and FIG. 18C, the harmonic gear device 1B is different from the harmonic gear device 1 in that the rolling surface 200 is arranged on the internal teeth 21 of the rigid internal gear 2. Hereinafter, same reference numerals are assigned to same structures as those described above, and descriptions thereof are appropriately omitted. FIG. 18A is an enlarged diagrammatic diagram of the region Z1 of FIG. 2B. FIG. 18B is a diagrammatic diagram showing a surface state of internal teeth 21 in a region Z1 of FIG. 18A. FIG. 18C is a diagrammatic diagram showing a surface state of internal teeth 21 in a region Z2 of FIG. 18A.

That is, in an embodiment not belonging to the invention, the rolling surface 200 is arranged only on the internal teeth 21 from the external teeth 31 and the internal teeth 21. In other words, the rolling surface 200 is a "second rolling surface" arranged on the internal teeth 21 of the rigid internal gear 2. The (second) rolling surface 200 is formed by processing (rolling processing) of not shearing metal crystalline grains, similarly to the (first) rolling surface 300.

Furthermore, in the rolling surface 200 (second rolling surface) arranged on the internal teeth 21, it is also the same as the rolling surface 300 (first rolling surface) of the external teeth 31, and it is preferable that the rolling surface 300 is arranged on portions (tooth root 212, etc.) except the tooth crest 213. That is, as shown in FIG. 18B where a part of the tooth root 212 of the internal tooth 21 (region Z1 in FIG. 18A) is enlarged, the tooth root 212 or the like of the internal tooth 21 where the rolling surface 200 is arranged, is mainly formed in a smooth surface state where crystalline grains are not sheared. In contrast, as shown in FIG. 18C where a part of the tooth crest 213 of the internal tooth 21 (region Z2 in FIG. 18A) is enlarged, the tooth crest 213 where the rolling surface 200 is not arranged, is mainly formed in a surface state where crystalline grains are sheared. Furthermore, it is shown that the surface roughness of the tooth root 212 (rolling surface 200) is smaller than that of the tooth crest 213.

Even in the structure where the rolling surface 200 is arranged on the internal teeth 21, since friction of the external teeth 31 with the internal teeth 21 is reduced, loss due to friction of the external teeth 31 with the internal teeth 21 is also reduced, and it is difficult to reduce power transmission efficiency of the harmonic gear device 1B. Furthermore, since surface roughness or rust caused by friction is suppressed, it is also difficult to prevent deformation followability of the flexible external gear 3, and it is not easy for rotation of the wave generator 4 to require additional energy, thereby suppressing reduction of power transmission efficiency. As a result, it is possible to provide the harmonic gear device 1B for which it is difficult to reduce power transmission efficiency.

As an example , rolling surfaces 200 and 300 are arranged on both the internal teeth 21 and the external teeth 31.

Structures may be applied in an appropriate combination with structures described above.

### (Summary)

As explained above, a harmonic gear device (1, 1A, 1B) of the invention is defined as in claim 1.

Since friction of the external teeth (31) with the internal teeth (21) is reduced, loss due to friction of the external teeth (31) with the internal teeth (21) is reduced, and it is difficult to reduce power transmission efficiency of the harmonic gear device (1, 1A, 1B). Furthermore, since surface roughness or rust caused by friction is suppressed, it is also difficult to prevent deformation followability of the flexible external gear (3), and it is not easy for rotation of the wave generator (4) to require additional energy, thereby suppressing reduction of power transmission efficiency. As a result, it is possible to provide the harmonic gear device (1, 1A, 1B) for which it is difficult to reduce power transmission efficiency.

The rolling surface (300, 200) may be arranged on a portion of the at least one of the external teeth (31) except tooth crests (313, 213).

In this way, it is easy to reduce friction of the external teeth (31) with the internal teeth (21).

In the harmonic gear device (1, 1A, 1B), the rolling surface (300, 200) may comprise a tooth direction trimming part (310, 210) arranged on an end of at least one side in a tooth direction (D1).

In this way, stress concentration at the end (tooth width end) in the tooth direction (D1) is alleviated, and tooth contact is improved.

According to the invention, the rolling surface (300) are arranged at least on the external teeth (31), and surface roughness of the rolling surface is smaller than that of the internal teeth (21).

In this way, it is easy to reduce friction of the external teeth (31) with the internal teeth (21).

The rolling surface (300) may be arranged only on the external teeth (31) in an outer peripheral surface of the flexible external gear (3).

In this way, it is enough for rolling processing to performed on only a required portion of the outer peripheral surface of the flexible external gear (3), which has a advantage of improving processability.

The invention further relates to a method for manufacturing a harmonic gear device (1, 1A, 1B) which is a method for manufacturing the harmonic gear device (1, 1A, 1B) described above, and comprises: a process of preparing a first base material forming a base of the rigid internal gear (2); a process of preparing a second base material (3A) forming a base of the flexible external gear (3); a process of forming the internal teeth (21) from the first base material; a process of forming the external teeth (31) from the second base material (3A); and a process of forming the rolling surface (300, 200) on at least one of the external teeth (31) by plastic deformation processing such that the rolling surface (200, 300) is arranged at least on the external teeth (31), and a surface roughness of the rolling surface (200, 300) is smaller than that of the internal teeth (21).

In this way, it is possible to provide a harmonic gear device (1, 1A, 1B) where friction of the external teeth (31) with the internal teeth (21) is reduced, and it is difficult to reduce power transmission efficiency.

At least one of the process of forming the internal teeth (21) from the first base material or the process of forming the external teeth (31) from the second base material (3A) can comprise cutting processing.

In this way, time required for forming the internal teeth (21) and the external teeth (31) may be shortened.

The plastic deformation processing is performed by using a tool (T4) provided with ribs (T42) at the same interval as a hob (T3) used in the cutting processing.

In this way, the rolling surface (300, 200) may be easily formed by using the tool (T4) instead of the hob (T3) and performing only the same operation of the hob head as in the hob processing.

The invention further relates to a joint device for a robot (130) which comprises: the harmonic gear device (1, 1A, 1B) described above; a first member (131) fixed to the rigid internal gear (2); and a second member (132) fixed to the flexible external gear (3).

In this way, it is possible to provide a joint device for a robot (130) where friction of the external teeth (31) with the internal teeth (21) is reduced, and it is difficult to reduce power transmission efficiency.

### Explanations of some reference numerals

- 1, 1A, 1B: Harmonic gear device
- 2: Rigid internal gear (gear component)
- 3: Flexible external gear (gear component)
- 3A: (Second) base material
- 4: Wave generator
- 21: Internal tooth
- 31: External tooth
- 41: Cam
- 42: Bearing
- 130: Joint device for a robot
- 131: First member
- 132: Second member
- 200: (Second) rolling surface
- 300: (First) rolling surface
- 210, 310: Tooth direction trimming part
- 213, 313: Tooth crest
- Ax1: Rotation axis
- D1: Tooth direction
- T3: Hob
- T4: Tool
- T42: Rib

### INDUSTRIAL APPLICABILITY

According to the implementations of the application, it is possible to provide a harmonic gear device, a method for manufacturing a harmonic gear device, and a joint device for a robot, which are difficult to reduce power transmission efficiency.

## Claims

1. A harmonic gear device (1, 1A, 1B), comprising:
an annular rigid internal gear (2), provided with internal teeth (21);
an annular flexible external gear (3), provided with external teeth (31) and arranged at an inner side of the rigid internal gear (2); and
a wave generator (4), provided with a non-circular cam (41) rotatably driven around a rotation axis (Ax1) as a center, and a bearing (42) mounted at an outer side of the cam (41), and the wave generator (4) arranged at an inner side of the flexible external gear (3) and configured to enable the flexible external gear (3) to generate flexure,
the flexible external gear (3) deformed with rotation of the cam (41), so that a part of the external teeth (31) is meshed with a part of the internal teeth (21), and configured to enable the flexible external gear (3) to rotate relative to the rigid internal gear (2) according to a difference between tooth numbers of the flexible external gear (3) and the rigid internal gear (2),
**characterized in that**
at least the external teeth (31) comprise a rolling surface (200, 300), formed by not shearing metal crystalline grains, wherein the rolling surface (200, 300) is arranged at least on the external teeth (31), and a surface roughness of the rolling surface (200, 300) is smaller than that of the internal teeth (21).

2. The harmonic gear device (1, 1A, 1B) of claim 1, wherein the rolling surface (200, 300) is arranged on a portion of the at least the external teeth (31) except tooth crests (213, 313).

3. The harmonic gear device (1, 1A, 1B) of claim 1 or 2, wherein the rolling surface (200, 300) comprises a tooth direction trimming part (210, 310) arranged on an end of at least one side in a tooth direction (D1).

4. The harmonic gear device (1, 1A, 1B) of any one of claims 1 to 3, wherein the rolling surface (200, 300) is arranged only on the external teeth (31) on an outer peripheral surface of the flexible external gear (3).

5. A joint device for a robot (130), comprising:
a harmonic gear device (1, 1A, 1B) of any one of claims 1 to 4;
a first member (131), fixed to a rigid internal gear (2); and
a second member (132), fixed to a flexible external gear (3).

6. A method for manufacturing a harmonic gear device (1, 1A, 1B), , the method comprising:
a process of preparing a first base material forming a base of a rigid internal gear (2);
a process of preparing a second base material (3A) forming a base of a flexible external gear (3);
a process of forming internal teeth (21) from the first base material;
a process of forming external teeth (31) from the second base material (3A); and
**characterized in that**
the method is used as a method for manufacturing a harmonic gear device (1, 1A, 1B) of any one of claims 1 to 4, and the method includes
a process of forming a rolling surface (200, 300) on at least one of the external teeth (31) by plastic deformation processing,
such that the rolling surface (200, 300) is arranged at least on the external teeth (31), and a surface roughness of the rolling surface (200, 300) is smaller than that of the internal teeth (21).

7. The method for manufacturing the harmonic gear device (1, 1A, 1B) of claim 6, wherein at least either the process of forming the internal teeth (21) from the first base material or the process of forming the external teeth (31) from the second base material (3A) comprises cutting processing.

8. The method for manufacturing the harmonic gear device (1, 1A, 1B) of claim 7, wherein the plastic deformation processing is performed by using a tool (T4) provided with ribs (T42) at a same interval as that of a hob (T3) used in the cutting processing.

## Patentansprüche

1. Harmonische Getriebevorrichtung (1, 1A, 1B), umfassend:
ein ringförmiges, starres Innengetriebe (2), das mit einer Innenverzahnung (21) versehen ist;
ein ringförmiges, flexibles Außengetriebe (3), das mit einer Außenverzahnung (31) versehen und an einer Innenseite des starren Innengetriebes (2) angeordnet ist; und
einen Wellengenerator (4), der mit einem nicht kreisförmigen Nocken (41), der um eine Drehachse (Ax1) als Mittelpunkt drehbar angetrieben wird, und einem an einer Außenseite des Nockens (41) montierten Lager (42) versehen ist, wobei der Wellengenerator (4) an einer Innenseite des flexiblen Außengetriebes (3) angeordnet und so konfiguriert ist, dass er es dem flexiblen Außengetriebe (3) ermöglicht, eine Biegung zu erzeugen,
wobei sich das flexible Außengetriebe (3) bei Drehung des Nockens (41) verformt, sodass ein Teil der Außenverzahnung (31) mit einem Teil der Innenverzahnung (21) verzahnt ist, und so konfiguriert ist, dass es dem flexiblen Außengetriebe (3) ermöglicht wird, sich gemäß einer Differenz zwischen der Zahnanzahl des flexiblen Außengetriebes (3) und des starren Innengetriebes (2) relativ zu dem starren Innengetriebe (2) drehen kann,
**dadurch gekennzeichnet, dass**
zumindest die Außenverzahnung (31) eine Rollfläche (200, 300) umfasst, die durch nicht gescherte metallische Kristallkörner ausgebildet ist, wobei die Rollfläche (200, 300) zumindest an der Außenverzahnung (31) angeordnet ist und eine Oberflächenrauheit der Rollfläche (200, 300) geringer ist als die der Innenverzahnung (21).

2. Harmonische Getriebevorrichtung (1, 1A, 1B) gemäß Anspruch 1, wobei die Rollfläche (200, 300) an einem Bereich zumindest der Außenverzahnung (31) mit Ausnahme der Zahnkämme (213, 313) angeordnet ist.

3. Harmonische Getriebevorrichtung (1, 1A, 1B) gemäß Anspruch 1 oder 2, wobei die Rollfläche (200, 300) einen in Zahnrichtung (D1) an einem Ende mindestens einer Seite angeordneten Zahnrichtungs-Trimmteil (210, 310) umfasst.

4. Harmonische Getriebevorrichtung (1, 1A, 1B) gemäß einem der Ansprüche 1 bis 3, wobei die Rollfläche (200, 300) ausschließlich an der Außenverzahnung (31) an einer Außenumfangsfläche des flexiblen Außengetriebes (3) angeordnet ist.

5. Gelenkvorrichtung für einen Roboter (130), umfassend:
eine harmonische Getriebevorrichtung (1, 1A, 1B) gemäß einem der Ansprüche 1 bis 4;
ein erstes Element (131), das an einem starren Innengetriebe (2) fixiert ist; und
ein zweites Element (132), das an einem flexiblen Außengetriebe (3) fixiert ist.

6. Verfahren zum Herstellen einer harmonischen Getriebevorrichtung (1, 1A, 1B), wobei das Verfahren Folgendes umfasst:
einen Prozess des Herstellens eines ersten Grundmaterials, das eine Basis eines starren Innengetriebes (2) ausbildet;
einen Prozess des Herstellens eines zweiten Grundmaterials (3A), das eine Basis eines flexiblen Außengetriebes (3) ausbildet;
einen Prozess des Ausbildens einer Innenverzahnung (21) aus dem ersten Grundmaterial;
einen Prozess des Ausbildes einer Außenverzahnung (31) aus dem zweiten Grundmaterial (3A); und
**dadurch gekennzeichnet, dass**
das Verfahren als Verfahren zum Herstellen einer harmonischen Getriebevorrichtung (1, 1A, 1B) gemäß einem der Ansprüche 1 bis 4 verwendet wird und das Verfahren Folgendes beinhaltet
einen Prozess des Ausbildens einer Rollfläche (200, 300) an mindestens einer der Außenverzahnungen (31) durch plastische Verformung,
so dass die Rollfläche (200, 300) zumindest an den Außenverzahnungen (31) angeordnet ist und eine Oberflächenrauheit der Rollfläche (200, 300) kleiner ist als die der Innenverzahnungen (21).

7. Verfahren zum Herstellen der harmonischen Getriebevorrichtung (1, 1A, 1B) gemäß Anspruch 6, wobei zumindest entweder der Prozess des Ausbildens der Innenverzahnung (21) aus dem ersten Grundmaterial oder der Prozess des Ausbildens der Außenverzahnung (31) aus dem zweiten Grundmaterial (3A) einen Zerspanungsvorgang umfasst.

8. Verfahren zum Herstellen der harmonischen Getriebevorrichtung (1, 1A, 1B) gemäß Anspruch 7, wobei die plastische Verformung unter Verwendung eines Werkzeugs (T4) durchgeführt wird, das mit Rippen (T42) versehen ist, die in demselben Abstand wie der eines bei der Zerspanung verwendeten Wälzfräsers (T3) sind.

## Revendications

1. Dispositif d'engrenage harmonique (1, 1A, 1B), comprenant :
un engrenage interne rigide annulaire (2), pourvue de dents internes (21) ;
un engrenage externe annulaire flexible (3), muni de dents externes (31) et disposé sur une face interne de l'engrenage interne rigide (2) ; et
un générateur d'ondes (4), muni d'une came non circulaire (41) entraînée en rotation autour d'un axe de rotation (Ax1) servant de centre, et d'un palier (42) monté sur un côté extérieur de la came (41), le générateur d'ondes (4) étant disposé d'un côté intérieur de l'engrenage externe flexible (3) et configuré pour permettre à l'engrenage externe flexible (3) de générer de la flexion,
l'engrenage externe flexible (3) se déformant sous l'effet de la rotation de la came (41), de sorte qu'une partie des dents externes (31) s'engrène avec une partie des dents internes (21), et étant configuré pour permettre à l'engrenage externe flexible (3) de tourner par rapport à l'engrenage interne rigide (2) en fonction d'une différence entre le nombre de dents de l'engrenage externe flexible (3) et celui de l'engrenage interne rigide (2),
**caractérisé en ce que**
au moins les dents externes (31) comprennent une surface de roulement (200, 300), formée sans cisaillage des grains cristallins métalliques, la surface de roulement (200, 300) étant disposée au moins sur les dents externes (31), et une rugosité de surface de la surface de roulement (200, 300) étant inférieure à celle des dents internes (21).

2. Dispositif d'engrenage harmonique (1, 1A, 1B) selon la revendication 1, dans lequel la surface de roulement (200, 300) est disposée sur une partie au moins des dents externes (31), à l'exception des crêtes de dents (213, 313).

3. Dispositif d'engrenage harmonique (1, 1A, 1B) selon la revendication 1 ou 2, dans lequel la surface de roulement (200, 300) comprend une partie de rognage dans un sens de dents (210, 310) disposée à une extrémité d'au moins un côté dans un sens de dents (D1).

4. Dispositif d'engrenage harmonique (1, 1A, 1B) selon l'une quelconque des revendications 1 à 3, dans lequel la surface de roulement (200, 300) est disposée uniquement sur les dents externes (31) situées sur une surface périphérique externe de l'engrenage externe flexible (3).

5. Dispositif d'articulation pour un robot (130), comprenant :
un dispositif d'engrenage harmonique (1, 1A, 1B) selon l'une quelconque des revendications 1 à 4 ;
un premier élément (131), fixé à un engrenage interne rigide (2) ; et
un deuxième élément (132), fixé à un engrenage externe flexible (3).

6. Procédé de fabrication d'un dispositif d'engrenage harmonique (1, 1A, 1B), le procédé comprenant :
une étape de préparation d'un premier matériau de base formant une base d'un engrenage interne rigide (2) ;
un processus de préparation d'un deuxième matériau de base (3A) formant une base d'un engrenage externe flexible (3) ;
une étape de formation de dents internes (21) à partir du premier matériau de base ;
une étape de formation de dents externes (31) à partir du deuxième matériau de base (3A) ; et
**caractérisé en ce que**
le procédé est utilisé comme un procédé de fabrication d'un dispositif d'engrenage harmonique (1, 1A, 1B) selon l'une quelconque des revendications 1 à 4, et le procédé comprend
un procédé de formation d'une surface de roulement (200, 300) sur au moins l'une des dents externes (31) par un traitement de déformation plastique,
de telle sorte que la surface de roulement (200, 300) soit disposée au moins sur les dents externes (31), et qu'une rugosité de surface de la surface de roulement (200, 300) soit inférieure à celle des dents internes (21).

7. Procédé de fabrication du dispositif d'engrenage harmonique (1, 1A, 1B) selon la revendication 6, dans lequel au moins l'une des opérations consistant à former les dents internes (21) à partir du premier matériau de base ou à former les dents externes (31) à partir du deuxième matériau de base (3A) comprend un traitement d'usinage par enlèvement de matière.

8. Procédé de fabrication du dispositif d'engrenage harmonique (1, 1A, 1B) selon la revendication 7, dans lequel le traitement par déformation plastique est réalisé à l'aide d'un outil (T4) muni de nervures (T42) espacées selon un même intervalle que celui d'une fraise-mère (T3) utilisée dans le traitement d'usinage par enlèvement de matière.
